# EUROPEAN PATENT SPECIFICATION

(11) **EP 2 862 178 B1**
(45) Date of publication and mention of the grant of the patent: **01.11.2017**
(21) Application number: 13803986.2
(22) Date of filing: 13.06.2013
(51) Int. Cl.: G21C 3/322, G21C 1/20, G21C 3/324, G21C 3/328, G21C 15/06, G21C 3/32, G21C 15/28, G21C 15/22, G21C 5/12

(54) **A PRESSURE-TUBE NUCLEAR REACTOR WITH A LOW PRESSURE MODERATOR AND FUEL CHANNEL ASSEMBLY**
DRUCKRÖHREN-KERNREAKTOR MIT EINEM NIEDRIGDRUCKAUSGLEICHER UND EINER BRENNSTOFFKANALANORDNUNG
RÉACTEUR NUCLÉAIRE À TUBE DE FORCE AVEC MODÉRATEUR À BASSE PRESSION ET ENSEMBLE CANAL DE COMBUSTIBLE

(30) Priority: 13.06.2012 US 201261659229 P; 13.06.2012 US 201261659219 P
(43) Date of publication of application: 22.04.2015
(73) Proprietor: Atomic Energy of Canada Limited/ Énergie Atomique du Canada Limitée, Chalk River, Ontario K0J 1J0 (CA)
(72) Inventor: YETISIR, Metin, Deep River, Ontario K0J 1P0 (CA); GAUDET, Michel, Pembroke, Ontario K0J 1P0 (CA); RHODES, David, Bruce, Deep River, Ontario K0J 1P0 (CA); KING, James, Mitchell, Deep River, Ontario K0J 1P0 (CA); DIAMOND, William, T., Deep River, Ontario K0J 1P0 (CA); LI, Jintong, Deep River, Ontario K0J 1P0 (CA)
(74) Representative: Isarpatent
(86) International application number: PCT/CA2013/050449
(87) International publication number: WO 2013/185232

(56) References cited:
- EP-A1- 0 282 600
- WO-A1-2011/130841
- CA-A- 674 773
- US-A- 3 128 234
- US-A- 3 179 571
- US-A- 3 365 370
- US-A- 4 305 458
- US-A- 4 726 926
- US-A- 4 826 653

## Description

### FIELD

The present subject matter of the teachings described herein relates generally to nuclear reactors, and more particularly nuclear reactors having coolant flowing through pressure tubes.

### BACKGROUND

Commercial nuclear power plants are known. Based on the mechanical design of the pressure retaining components of the reactor core, commercial nuclear reactors can be grouped as either "pressure-vessel" or "pressure-tube" type reactors. Examples of a pressure-vessel type reactor are Pressurized Water Reactors (PWR) and Boiling Water Reactors (BWR). In these reactor designs nuclear fuel is contained in a large pressure vessel. Where a fluid moderator is used, the coolant and the moderator fluid are the same fluid and thus there is no need to maintain two different fluids separated from one another within the pressure vessel. The single fluid can be supplied to the pressure vessel using an inlet plenum and withdrawn from the vessel using an outlet plenum. In such designs there is no need to isolate a coolant fluid from a separate or different moderator fluid, consequently the plenums need not feed a plurality of separate, sealed fuel channels.

In some pressure vessel designs moderator and coolant are separated through the use of flow channels, but these flow channels are not pressurized (i.e. do not form a pressure boundary) and some leakage between the coolant and the moderator is acceptable because both the coolant and the moderator are the same fluid.

Traditional, horizontal type pressure-tube nuclear reactors are known. Some existing commercial pressure-tube type reactors include a plurality of individual fuel channels extending horizontally through a low-pressure vessel containing a heavy water moderator. Nuclear fuel bundles are placed within the pressure tube inside the fuel channel. A coolant fluid is circulated through the pressure tube and is heated by nuclear fission.

Existing reactor designs, both of the pressure-vessel and pressure-tube type, cannot readily be adapted for use with a supercritical water, as the coolant and heat transfer medium. For a supercritical fluid, this specification and the present invention propose a configuration of pressure tubes, suitable for use with such a fluid. To reach a supercritical state, the coolant fluid will be maintained at high pressures (for example at pressures greater than 23 MPa) and at elevated temperatures. Existing pressure tube designs cannot withstand such high pressures without significantly increasing the pressure tube wall thickness to accommodate increased operating loads and decreased material strength. Simply increasing the thickness of the pressure tube thickness may not be feasable due to tube spacing requirements and decreased reactor efficiency. Also, existing pressure tube materials can be prone to increased corrosion and wear when exposed to supercritical water.

Creating large-diameter pressure vessels for existing reactor designs to withstand high pressures and correspondingly high temperatures can be costly and may be limited by the existing manufacturing capabilities. It may be desirable that the supercritical coolant does not contact the pressure vessel walls that are exposed to the full operating pressure and temperature.

Coolant feeder pipes (coolant inlet pipes and coolant outlet pipes) in some existing commercial pressure tube type reactors are an integral part of the primary heat transport system, connecting the in-reactor fuel channels to the headers with heat transport pipes. The reactor core commonly has separate calandria tubes, providing passages for the pressure tubes through the low-pressure calandria vessel, and the pressure tubes extend through the calandria tubes. Garter springs maintain spacing between each pair of a calandria tube and a pressure tube, and define an annulus.

Other examples of nuclear reactor assemblies are disclosed in the patent documents US 3,179,571 A, US 3,365,370 A, and US 3,128,234 A.
Pressure tube nuclear reactors with coolant inlet and outlet plenum are disclosed in patent documents WO 2011/130841 A1 and CA674773 A.

### SUMMARY

This summary is intended to introduce the reader to the more detailed description that follows.

According to the invention, a pressure-tube nuclear reactor comprises an outer shell vessel for containing a moderator at a first pressure and a coolant inlet plenum provided above the moderator. The reactor further comprises a coolant outlet plenum and one of the coolant inlet plenum and coolant outlet plenum is within the other of the coolant inlet plenum and the coolant outlet plenum. The reactor comprises a plurality of fuel channel assemblies for a coolant fluid at a second, higher pressure. The fuel channel assemblies are fluidly connected at inlet ends thereof to the coolant inlet plenum. The fuel channel assemblies are mounted within the outer shell vessel and may be surrounded by the moderator. Outlet ends thereof are fluidly connected to the coolant outlet plenum to enable the coolant fluid to circulate from the coolant inlet plenum through the fuel channel assemblies to the coolant outlet plenum. Each fuel channel assembly extends in an axial direction and comprises an outer conduit. The outer conduit has an upper end and a lower end axially spaced apart from the upper end. An inner conduit is disposed at least partially within the outer conduit. The inner conduit has an upper end and a lower end, wherein one upper end of one of the inner and the outer conduits is in communication with the coolant inlet plenum and the other upper end of the other of the inner and outer conduits is in communication with the coolant outlet plenum. Coolant flows from the coolant inlet plenum through said one upper to the lower ends of the inner and outer conduits and through the other upper end to the coolant outlet plenum. A fuel bundle chamber is defined between an inner surface of the outer conduit and an outer surface of the inner conduit. The fuel bundle chamber at least partially laterally surrounds the inner conduit and is configured to receive at least one nuclear fuel bundle. Coolant flow in the fuel bundle chamber passes through the fuel bundle. The plurality of fuel channel assemblies maintaining separation between the coolant fluid circulating within the fuel channel assemblies and the moderator. A passive moderator cooling circuit may extend between a passive inlet positioned toward the top of the outer shell vessel, a passive return positioned toward the bottom of the outer shell vessel and a heat exchanger provided between the passive inlet and the passive return.

### DRAWINGS

The drawings included herewith are for illustrating various examples of articles, methods, and apparatuses of the teaching of the present specification and are not intended to limit the scope of what is taught in any way.

In the drawings:
Figure 1 is a perspective view of a pressure-tube nuclear reactor;
Figure 2 is a sectional view of the reactor of Figure 1, taken along line 2-2;
Figure 3 is an enlarged view of a portion of the interior of the reactor of Figure 1;
Figure 4 is an exploded, section view of the reactor of Figure 1;
Figure 5a is a side view of a portion of a fuel assembly;
Figure 5b is an enlarged view of a portion of Figure 5a;
Figure 5c is an enlarged view of a portion of Figure 5a;
Figure 5d is an enlarged view of a portion of Figure 5a;
Figure 5e is a side view of a portion of another example fuel assembly;
Figure 6 is an enlarged view of a portion of Figure 3;
Figure 7 is a partial cut-away view of a portion of the fuel assembly of Figure 5a;
Figure 8 is an exploded view of the portion of a fuel assembly of Figure 5a;
Figure 9 is an enlarged view of a portion of Figure 8;
Figure 10 is a schematic representation of a portion of a fuel channel assembly;
Figure 11 is a schematic representation of a portion of a fuel channel assembly;
Figure 12 is a schematic representation of the reactor of Figure 1;
Figure 13a is a schematic cross-sectional view of an example of a fuel bundle in a fuel channel assembly;
Figure 13b is a schematic cross-sectional view of another example of a fuel bundle in a fuel channel assembly;
Figure 13c is a schematic cross-sectional view of an example of known fuel bundle in a known fuel channel assembly;
Figure 13d is a schematic cross-sectional view of another example of a fuel bundle in a fuel channel assembly;
Figure 14 is a section view of another example of a pressure-tube nuclear reactor;
Figure 15 is an enlarged view of a portion of the reactor of Figure 14;
Figure 16 is an enlarged view of a portion of Figure 15;
Figure 17 is another enlarged view of a portion of the reactor of Figure 14;
Figure 18 is another enlarged view of a portion of the reactor of Figure 14;
Figure 19 is an enlarged view of a portion of Figure 17;
Figure 20 is a schematic representation of the reactor of Figure 14;
Figure 21 is a schematic representation of another example of a pressure-tube reactor;
Figure 22 is a schematic representation of an example of a pressure-tube reactor with active and passive moderator cooling systems; and
Figure 23 is a cross-sectional view of a portion of an alternate embodiment of a pressure-tube nuclear reactor.

Elements shown in the figures have not necessarily been drawn to scale. Further, where considered appropriate, reference numerals may be repeated among the figures to indicate corresponding or analogous elements.

### DETAILED DESCRIPTION

Various apparatuses or processes will be described below to provide an example of an embodiment of the claimed invention. No embodiment described below limits the claimed invention and the claimed invention may cover apparatuses that differ from those described below. The invention is defined in the appended claims.

This specification generally describes a pressure-tube type nuclear reactor having a relatively low-pressure moderator. For example, the moderator can be maintained at a pressure range of 0 MPa(g) to 2 MPa(g) and may be about 0.5 MPa(g). Optionally, the moderator may be a fluid or a solid. In the examples described herein the moderator is a heavy water fluid moderator. Alternatively, the moderator can be any suitable moderator, fluid or solid, including for example, a graphite based solid moderator. The teachings disclosed herein may be generally applicable to any pressure-tube type reactor.

According to one aspect of the described reactor, the pressure-tube reactor is configured such that a pressurized coolant fluid is circulated through the fuel channel assemblies. The coolant may be any suitable fluid, including, for example, light water, heavy water, molten salts, and molten metals and may be circulated as a liquid, gas, a mixed-phase flow and/or a super-critical fluid. The fuel channel assemblies include a pressure tube that is submerged within the moderator and serve as a pressure barrier between the low pressure moderator and the high pressure coolant. The coolant circulated within the fuel channel assemblies may be pressurized to pressures that are substantially higher than the pressure of the moderator, and may be, for example, may be any suitable pressure between about 8 MPa and about 26 MPa and/or may be up to about 30 MPa or higher.

The fuel channel assemblies can be arranged in any suitable pattern and/or orientation, including for example having circular, hexagonal, square or other suitable cross-sectional shapes. In the illustrated examples, the fuel channel assemblies are arranged generally vertically within the reactor core. Alternatively, the fuel channel assemblies may be arranged horizontally or at any other suitable angle based on alternative reactor core designs.

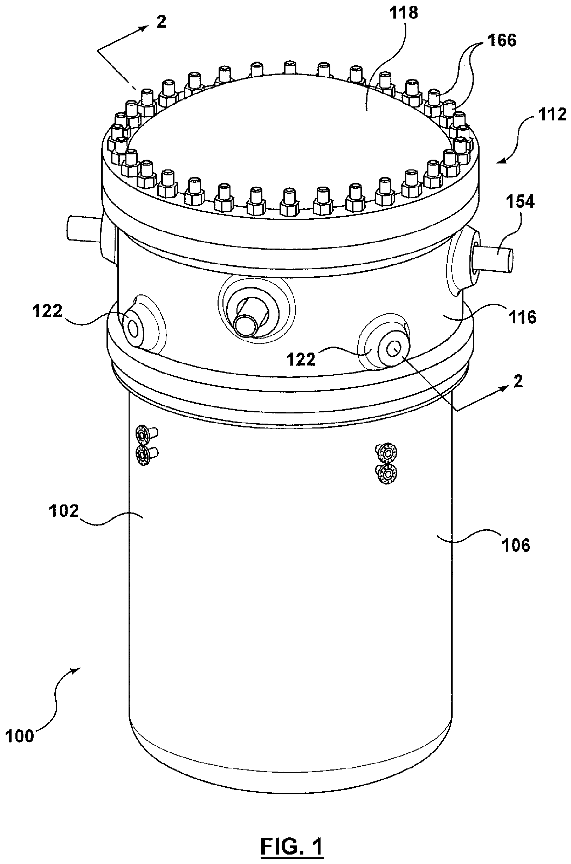

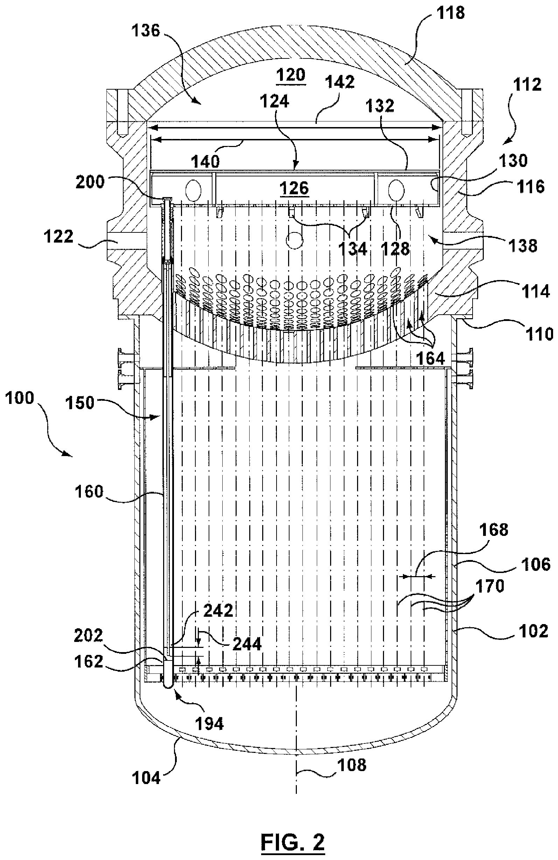

Referring to Figure 1, an example of a pressure-tube type reactor 100 includes an outer shell vessel 102, also referred to as a calandria, which is configured to contain a moderator fluid. In the illustrated example, the moderator is heavy water. Alternatively, the moderator may be any other suitable fluid and/or material. Referring to Figure 2, the calandria vessel 102 includes a bottom wall 104 and a side wall 106 extending upward from the bottom wall 104 about a calandria axis 108, and terminating at an upper rim 110. The calandria 102 may be formed from any suitable material, including, for example steel, and may be configured to contain the moderator at relatively low pressures, for example between about 100 kPa and about 2 MPa. In this configuration, the calandria 102 need not be a pressure vessel capable of containing high pressures. This may help simplify the design and construction of the calandria 102. The configuration of the calandria 102 is simplified for the purposes of this description, and the calandria 102 may include a variety of fittings, ports, valves, reactor control mechanisms (such as moderator rods and/or control rods), sensors, control systems, cooling systems, cover gas circulation systems and a variety of other suitable components and apparatuses in any given installation. Operating the calandria 102 as a low-pressure vessel may help simplify the installation and/or operation of these, and other, components as the components do not need to extend across a high-pressure boundary. For example, valves, pumps and other equipment used to circulate moderator liquid within the calandria need only to be able to operate at the relative low pressures (e.g. up to about 2 MPa), and need not be capable of containing or withstanding pressures of 26 MPa or more. This may also simplify the configuration and/or operation of reactor control systems, such as the control and shutoff rods, that may pass through the side wall of the calandria.

In the illustrated example the calandria 102 is illustrated as being generally circular in axial cross-sectional shape. Alternatively, the calandria 102 may have any suitable configuration, and need not be cylindrical or have a circular axial cross-sectional shape.

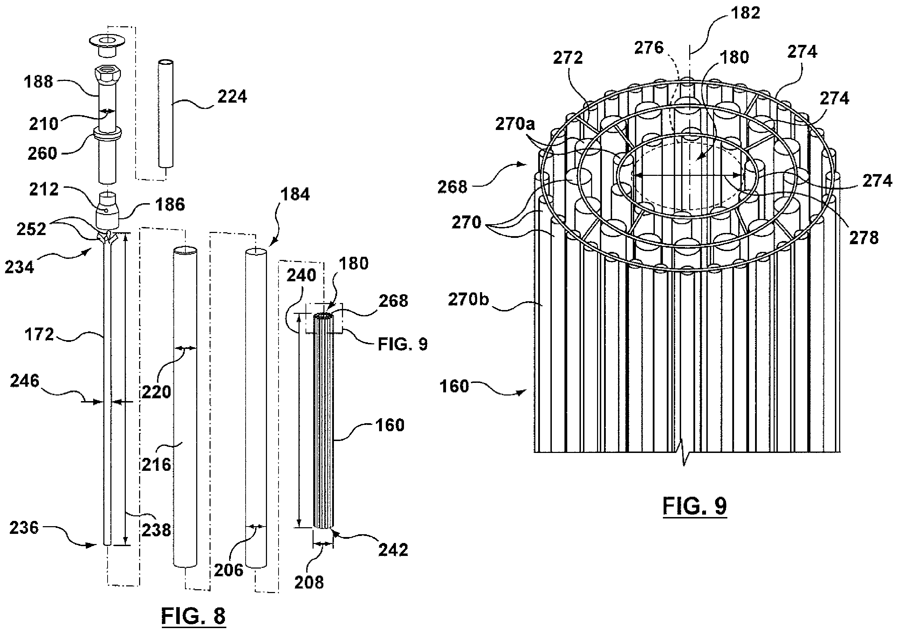

Referring to Figure 1, a pressurized coolant plenum vessel 112 is connected to the upper rim 110 of the calandria 102. The plenum vessel 112 is configured to supply coolant to a plurality of fuel channel assemblies 150 (Figure 2) in the reactor 100 (only a single fuel channel assembly 150 is illustrated for clarity, and is described in more detail below) and to extract the heated coolant from the fuel channel assemblies 150 after the coolant has been heated by flowing past nuclear fuel bundles 160 (Figure 8) contained within the fuel channel assemblies 150. The coolant is pressurized to a higher pressure than the moderator, and the plenum vessel 112 is a pressure vessel capable of withstanding the operating temperatures and pressures of the coolant.

Referring to Figure 2, in the illustrated example the plenum vessel 112 includes a tubesheet 114, a sidewall 116 and a cover 118 that cooperate to define a first plenum chamber 120. In the illustrated example, the first plenum chamber 120 is in fluid communication with either an inlet or outlet of each fuel channel assembly to allow coolant to flow between the first plenum chamber 120 and each of the fuel channel assemblies.

One or more fluid ports can be provided in the plenum vessel 112 to allow coolant to flow in and out of the first plenum chamber 120. In the illustrated example, the plenum vessel includes 4 ports 122 spaced apart from each other around the sidewall 116. The ports 122 may be connected to any suitable conduits and/or pipes, and may include any suitable valves, flow regulators or other suitable apparatuses to control fluid flow through the ports. The number of ports 122 can depend on a variety of factors, including expected coolant flow rates, coolant pressure, coolant temperature, plenum size, piping costs, desire for redundant coolant supply and physical space constraints.

Referring to Figure 2, in the illustrated example, a second plenum 124 is nested within the first plenum chamber 120. The second plenum 124 includes a second plenum chamber 126 that is bounded by a bottom wall 128, a sidewall 130 and an upper wall or lid 132. In this configuration the second plenum chamber 126 is self-contained and is fluidly isolated from the first plenum chamber 120 so that fluid within the second plenum 124 does not mix with fluid in the first plenum chamber 120.

Optionally, the second plenum 124 may be removable from the first plenum chamber 120. This may help facilitate inspection and maintenance of the second plenum 124, and may help facilitate access to the tubesheet 114, fuel channel assemblies 150 and other portions of the plenum vessel 112 disposed below the second plenum 124. In the illustrated example, the second plenum 124 is supported on a plurality of support brackets 134 extending from the sidewall 116. The support brackets 134 may be integrally formed with the sidewall 116, or may be separate members joined to the sidewall 116. The size and number of support brackets 134 may be selected based on a variety of factors, including the strength of the second plenum 124, the strength of the support brackets 134, and the material of the support brackets 134.

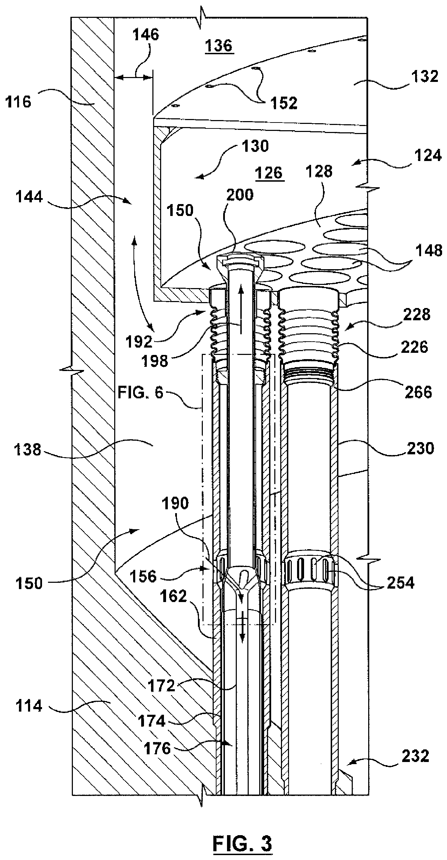

Referring also to Figure 3, in the illustrated example, the second plenum 124 separates the first plenum chamber 120 into an upper portion 136, above the second plenum 124, and a lower portion 138, below the second plenum 124. Preferably, the second plenum 124 is configured to allow coolant fluid to circulate between the upper and lower portions 136, 138 so that the upper and lower portions 136, 138 remain in fluid communication with each other. In the illustrated example, the second plenum 124 is sized such that the width 140 of the second plenum 124 is less than the internal width 142 of the first plenum chamber 120 (Figure 2). In this configuration, a gap 144 (Figure 3) is provided around the perimeter of the second plenum 124, between an outer surface of the second plenum sidewall 130 and an opposing inner surface of the first plenum sidewall 116. The gap 144 provides a fluid flow path around the outside of the second plenum 124 to link the upper portion 136 and lower portion 138. The size 146 of the gap 144 may be altered by varying the relative sizes of the first and second plenums.

Referring to Figure 2, the bottom wall 128 of the second plenum 124 includes a plurality of apertures 148 for connecting to either an inlet or outlet of respective ones of the fuel channel assemblies to allow coolant fluid to flow between each of the fuel channel assemblies and the second plenum chamber 126. In this configuration, a coolant flow path is provided so that coolant fluid can flow between the first plenum chamber 120 and the second plenum chamber 126 via the fuel channel assemblies 150. Optionally, some or all of the pressure tubes 162 and/or liner tubes 174 may be detachably coupled to the bottom wall 128 using any suitable connector. Providing detachable connections for the pressure tubes 162 may allow individual pressure tubes 162 and/or other portions of the fuel channel assemblies 150 to be removed, serviced and/or replaced without requiring replacement of other pressure tubes or fuel channel assemblies.

Because pressure losses in the fuel channel assemblies 150 are higher than in the inlet plenum chamber 120, incoming coolant may divide reasonably uniformly into the plurality of fuel channel assemblies 150. However, if further control of coolant flow rates is desired, flow control apparatus (not shown), such as, for example orifice plates, may be used in some or all of the fuel channel assemblies.

Referring to Figure 3, optionally, the lid 132 may be connected to the sidewall 130 using releasable or detachable fasteners, such as screws 152, so that the lid 132 may be detachable from the sidewall 130. Allowing the lid 132 to be detached from the sidewall 130 may help facilitate inspection and maintenance of the second plenum 124. It may also allow access to the interior of the fuel channel assemblies 150 coupled to the bottom wall 128, which may allow for refueling, inspection of and/or maintenance access to the fuel channel assemblies 150.

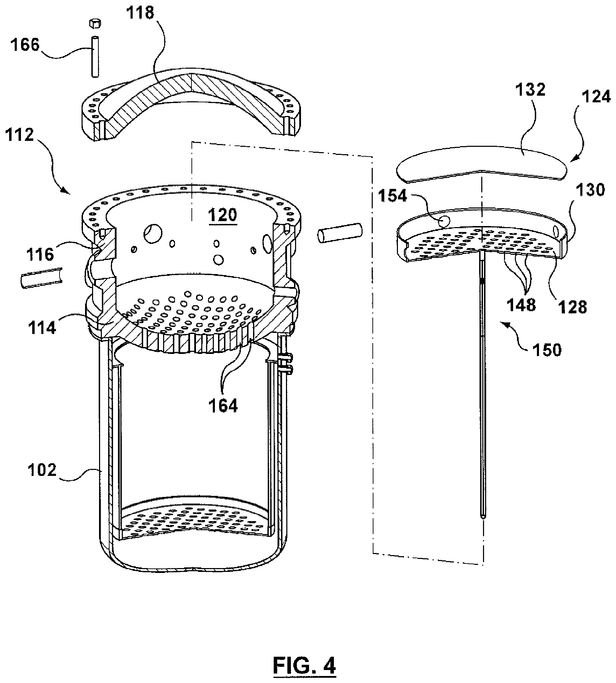

Referring to Figure 4, in the illustrated example, opening the lid 132 of the second plenum 124 allows simultaneous access to all of the fuel channel assemblies 150. Alternatively, the lid 132 may be provided in multiple sections, each of which allows access to only a portion of the fuel channel assemblies.

Optionally, the pressure within the second plenum chamber 126 may be maintained at a pressure that is close to the operating pressure of the first plenum chamber 120. For example, the operating pressures in the first and second plenum 120, 126 may be within about 0.1-5 MPa of each other. In this configuration, the bottom wall 128, lid 132 and sidewall 130 need not be configured to carry a high pressure load. This may allow the bottom wall 128, lid 132 and sidewall 130 to have lower strength than the cover 118, sidewall 116 and tubesheet 114. Alternatively, the second plenum 124 may be configured to withstand a relatively large pressure differential.

In the illustrated example, the first plenum chamber 120 functions as a coolant inlet plenum, the ports 122 operate as coolant inlet ports, the second plenum chamber 126 functions as a coolant outlet plenum and its ports 154 (Figures 1, 4) function as coolant outlet ports. Referring to Figure 3, in this configuration, the coolant inlet plenum 120 is in fluid communication with the inlet 156 of each fuel channel assembly 150 to supply coolant into each fuel channel assembly and the coolant outlet plenum 126 is in fluid communication with the coolant outlet 158 of each fuel channel assembly 150 to collect the heated coolant fluid.

Coolant may be supplied to the inlet plenum 120 at any suitable inlet temperature and inlet pressure. The combination of inlet temperature and pressure desired may be based on the properties of a given reactor core design and/or nuclear fuel type. Optionally, the plenum vessel 112 can be configured to handle liquid coolants, gas coolants, mixed-phase coolants and super-critical coolant conditions. For example, in some configurations the inlet temperature may be between about 100°C and about 370°C or more, and may be between about 260°C and about 350°C. The inlet pressure may be between about 5 MPa and about 30 MPa or more, and may be between about 10 MPa and about 26 MPa. Optionally, the inlet conditions may be selected so that the incoming coolant remains sub-critical. This may help facilitate greater energy pickup from the fuel bundles 160 when the coolant flows through the fuel channel assembly 150.

The temperature and pressure of the coolant as it exits the fuel channel assemblies 150, and flows into the outlet plenum 124, may vary based on the quantity of heat transferred from the fuel bundles 160 and the amount of pressure drop generated as the coolant flows past the fuel bundles 160 in the fuel channel assembly 150. When operated in sub-critical conditions, the outlet temperature may be between about 290°C and about 350°C and the outlet pressure may be between about 8-12 MPa. When operated under supercritical coolant conditions, the outlet temperature may be between about 374°C and about 675°C (and may be about 625°C) and the outlet pressure may be about 22-26 MPa. In other configurations, the outlet pressure may be between about 12 and about 22 MPa and may be greater than 26 M Pa.

In some configurations, there may be a significant temperature difference between the coolant in the inlet plenum 120 and coolant in the outlet plenum 124. For example, under supercritical operating conditions, the temperature difference between the inlet plenum 120 and outlet plenum 124 may be between about 250-300°C, or more. Such temperature differences may impart significant thermal stresses in the second plenum lid 132, sidewall 130 and bottom wall 128. As it is located outside of the neutron field, the outlet plenum 124 may be made from a variety of suitable materials, including, for example stainless steel and nickel-based super alloys. Optionally, some or all of the outlet plenum 124 may be thermally insulated using any suitable techniques and/or materials to help limit heat transfer between the plenums 120, 124 and to help reduce thermal stresses on the second plenum 124. For example, the lid 132, sidewall 130 and bottom wall 128 may be coated with an insulating material and/or made from multiple layers. Alternatively, as the pressure difference between the plenums may be relatively small, the second plenum 124 may be formed from materials that have desirable thermal properties, including, for example refractory materials and ceramic-based materials, instead of highly thermally conductive metals.

Heated coolant extracted from the outlet plenum 124 can be used to generate electrical power. Optionally, the heated coolant fluid can be used to directly drive suitable steam turbine generators (not shown). This may help improve the efficiency of a nuclear power generation station as the heated coolant may remain at a high temperature when it reaches the turbines. Alternatively, the heated coolant may be used to heat a secondary circuit, for example via a steam generator, and the turbine generators may be driven by steam in the secondary circuit. Configuring the system to include a steam generator and secondary circuit may help increase the safety of the power generation system, but may reduce overall efficiency.

In the illustrated example, the tubesheet 114, in combination with the pressure tubes 162 (Figure 2, described below), forms part of the pressure barrier between the high pressure coolant and the low pressure moderator. The tubesheet 114 may also separate the reactor core (containing fissile nuclear fuel) from the non-core portions of the reactor. The tubesheet 114 includes a plurality of apertures 164 to accommodate the plurality of fuel channel assemblies 150.

Optionally, the tubesheet 114 can be formed in a generally dome or hemi-spherical shape to help resist the operating pressures of the coolant. The cover 118 may have a similar dome or hemi-spherical shape. Alternatively, the tubesheet 114 and/or cover 118 may have any other suitable shape, including, for example a generally flat or planar configuration.

The plenum vessel 112 is located outside the region of reactor core neutron flux, and need not be formed from a material having a low neutron absorption cross-section. Optionally, the plenum vessel 112 can be formed from any suitable material that can withstand the operating temperatures and pressures of the coolant, including, for example stainless steel, steel alloys and other ferrous metals. The thickness of the tubesheet 114, sidewall 116 and cover 118 can be selected to provide a desired strength to contain the high pressure coolant, and may be based on the material used to form the plenum vessel 112. Optionally, different portions of the plenum vessel 112 may be formed from different materials.

In the illustrated example the tubesheet 114 and sidewall 116 are integrally formed together. This may eliminate the need for connecting the sidewall 116 to the tubesheet114 and to seal such a connection with a seal capable of withstanding high pressures. Alternatively, the sidewall 116 and tubesheet 114 may be formed as separate members. In some examples, some or all of the cover 118, side walls 116 and tubesheet 114 can have a wall thickness between 0.05m and 1.0m, or more, and in some examples may have a thickness of between about 0.4m and about 1.0m.

Optionally, the cover 118 may be connected to the sidewall using releasable or detachable fasteners, such as studs 166, so that the cover 118 may be detachable from the sidewall 116 (Figure 4). Allowing the cover 118 to be detached from the sidewall may help facilitate inspection and maintenance of the inlet plenum 120 and may allow access to the second plenum 124. Opening the cover 118 and lid 132 may also facilitate the fueling and re-fueling of the reactor 100.

In addition to containing and routing coolant, some or all of the cover 118, sidewall 116, tubesheet 114 and the volume of coolant retained within the plenum vessel 112 can provide radiation shielding at the top of the reactor 100. In some examples the inlet plenum 120 and coolant can provide a sufficient or desired level of radiation shielding so that the reactor 100 does not require a separate upper shield member. In other examples, the reactor can include a separate upper shield, for example a neutron shield as known in the art (not shown), to provide a desired or required level of radiation shielding toward the top of the reactor. A separate shield, if desired, can be located in any suitable location as known in the art, including, for example, between the tubesheet 114 and the calandria 102 and above/ surrounding the cover 118. In the illustrated example, there may be about 0.5m to about 1m or more of fuel-free moderator surrounding the fuel-filled space within the calandria 102. This moderator may act as a reflector and may provide shielding. The tubesheet 114 itself may also act as an additional shield member.

Referring to Figure 2, a plurality of fuel channel assemblies 150 can extend from the plenum vessel 112 into the calandria 102 and portions of the assemblies, such as the pressure tubes 162, can be submerged in the moderator. The number, configuration and arrangement or pitch spacing of the openings 164 in the tubesheet 114 (defined as generally horizontal distance 168 between the fuel channel axes 170) can be any suitable distance. In some examples the pitch spacing 168 is smaller than the pitch spacing used on conventional pressure-tube reactors. The spacing 168 may be determined from requirements for the nuclear reactor 100.

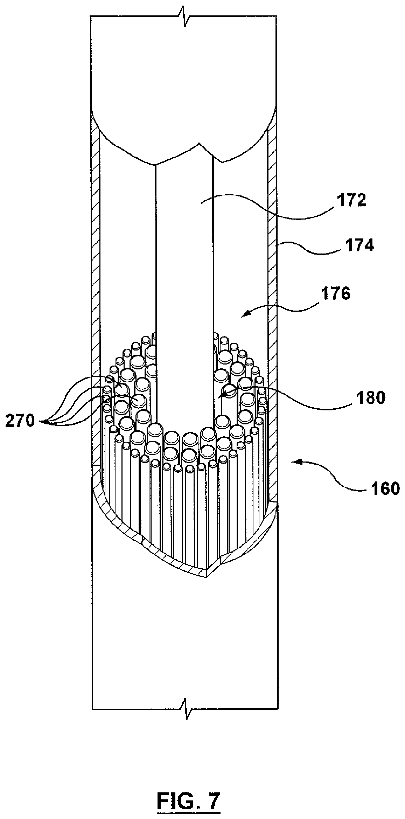

Each fuel channel assembly 150 is sized to accommodate one or more nuclear fuel bundles 160 (see for example Figure 7) and to contain a flow of circulating coolant flowing between the inlet plenum 120 and the outlet plenum 124. Referring to Figure 3, each fuel channel assembly 150 has a coolant inlet 156, connected to a coolant supply source (e.g. the coolant inlet plenum 120) and a coolant outlet 158 downstream from the coolant inlet 156, that is connected to a coolant outlet conduit (e.g. the coolant outlet plenum 124). The fuel bundles 160 are positioned within the fuel channel assembly 150 in the flow path of the coolant, between the coolant inlet and the coolant outlet. In Figure 2, a single fuel channel assembly 150 is illustrated for clarity, but it is understood that some or all of the features of the fuel channel assembly 150 illustrated may be incorporated in some or all of the fuel channel assemblies used in a given reactor.

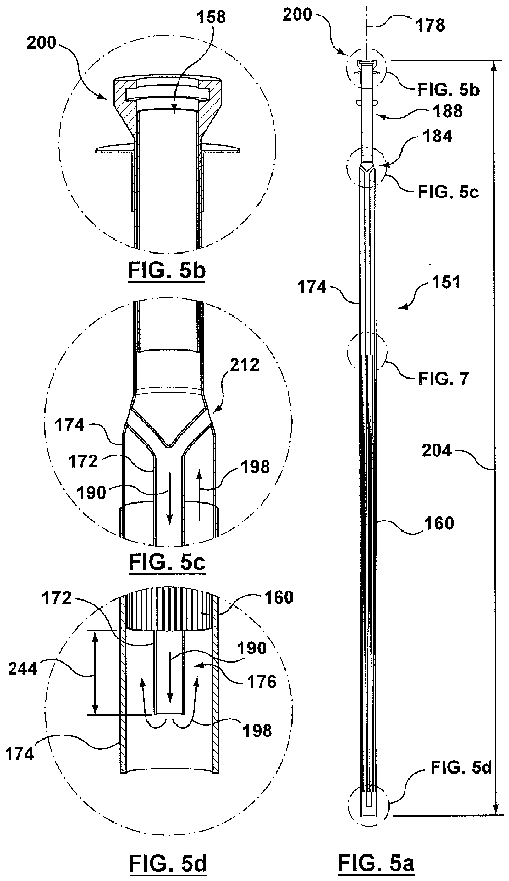

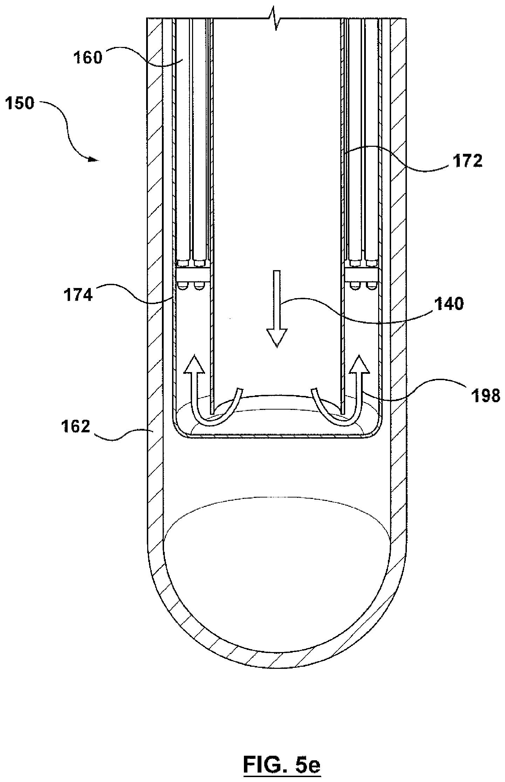

In the illustrated example, each fuel channel assembly 150 includes a pressure tube (for example pressure tube 162, Figure 2), one or more insulator members (for example insulator 216, Figure 5) and a fuel assembly 151 (Figures 5a-5d). The fuel assembly 151 may include a plurality of components, including inner and outer conduits that are connected to each other and can be manipulated in unison (for example during fueling, re-fueling and/or maintenance operations). Optionally, the insulator members may form part of the fuel assembly, and may be fixed to and movable with the inner and outer conduits.

Referring to Figure 3, in the illustrated example the fuel assembly 151 includes an inner conduit 172 received within an outer conduit 174 and a fuel bundle chamber 176 defined by the space between the outer surface of the inner conduit 172 and the opposed inner surface of the outer conduit 174. The inner and outer conduits 172, 174 are received within the pressure tube 162. In the illustrated example, the pressure tube 162 provides both pressure and fluid separation between the moderator and the coolant circulating within the fuel channel assembly 150. For comparison, another pressure tube 162 is illustrated in Figure 3 without an inner conduit 172 or inner conduit 174.

The fuel bundle chamber 176 is configured to receive corresponding nuclear fuel bundles 160. The fuel assembly 151 has a fuel channel assembly axis 178 (Figure 5a) defining an axial direction and has a lateral or radial direction that is generally orthogonal to the fuel channel assembly axis 178.

Referring to Figure 7, fuel bundles 160 configured to fit within the fuel chamber 176 may optionally at least partially surround the inner conduit 172. Optionally, the fuel bundle 160 can be configured to entirely, laterally surround the inner conduit 172, such that the inner conduit 172 passes axially through a corresponding opening or passage 180 in the fuel bundle 160. In this configuration the fuel bundle 160 may be axially slid onto the inner conduit 172, and may not be laterally removable or separable from the inner conduit 172. Preferably, the inner conduit 172 can be positioned to extend axially through the lateral centre of the fuel bundle 160 (e.g., co-axial with the central axis 182 (Figure 9) of the fuel bundle 160). Alternatively, the fuel bundle 160 may be configured to only partially surround the inner conduit 172, such that the fuel bundle 160 may be laterally engaged and/or disengaged from the inner conduit 172.

Referring to Figure 5a, in the illustrated example, the inner conduit is a coolant downflow tube 172 and the outer conduit is a liner tube 174. Referring also to Figure 8, in the illustrated example, the liner tube 174 includes a lower portion 184, a coupling 186 and an upper portion 188. Alternatively, the liner tube 174 may be provided as a single, continuous member. Optionally, the lower portion 184, coupling 186 and upper portion 188 may be formed from the same material, or from different materials. For example, the lower portion 184 may be formed from a zirconium alloy and the upper portion 188 may be formed from stainless steel or other suitable material. If formed as different members, the lower portion 184, coupling 186 and upper portion 188 may be connected to each other using any suitable connection means that is compatible with the configuration and materials of the liner tube 174, including, for example welds, mechanical connections, interference fits, threaded couplings and other mechanisms.

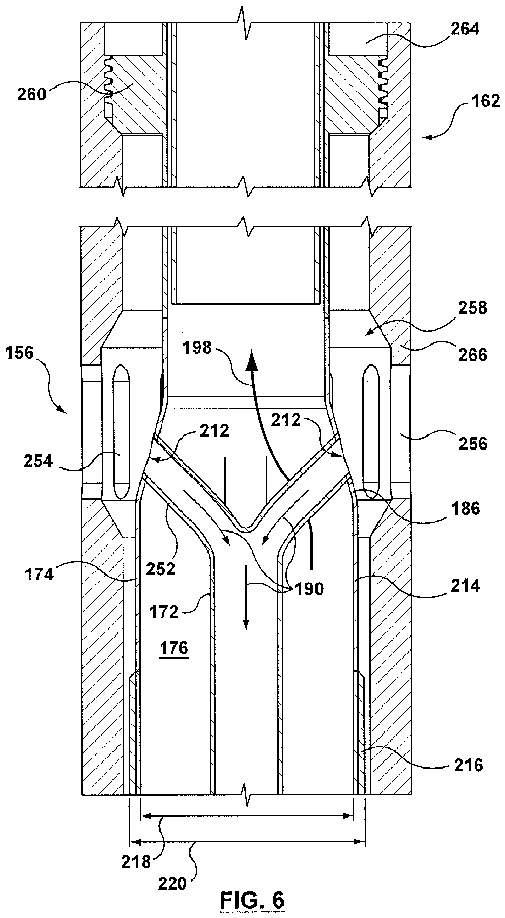

Referring to Figure 6, in the illustrated example, the coolant is in a liquid state when it flows through the coolant downflow tube 172, as illustrated by arrows 190, and the inventors believe that this liquid coolant may provide neutron moderation within the fuel bundle 160 placed in the fuel bundle chamber 176. This may help facilitate for uniform power generation across the fuel bundle 160. Providing more uniform power generation may help reduce the peak temperature on the surface of the fuel elements (the cladding or sheath containing the fissile material), which may help improve operating safety. In contrast, the inventors have noted that in conventional fuel bundle designs fuel elements located toward the centre of the fuel bundle may generate lower power due to a lack of neutron moderation as compared to exterior fuel elements.

In this example, the coolant downflow tube 172 and liner tube 174 are generally circular in axial cross-sectional shape and are concentric with each other. In this configuration, the fuel bundle chamber 176 is generally annular in shape and is configured to receive generally cylindrical fuel bundles 160. Alternatively, the coolant downflow tube and liner tube may have any other suitable cross-sectional shape and the fuel bundle chamber may have another shape.

The pressure tube 162 is sealed to the tubesheet 114 and forms part of the pressure boundary between the high pressure coolant and the lower pressure moderator. In the illustrated example, the pressure tube 162 has an upper end 192 (Figure 3) that is connected to the bottom wall 128 of the outlet plenum 124, and a closed lower end 194 (Figure 2). The closed lower end 194 of the pressure tube 162 contains the coolant exiting the coolant downflow tube 172 and helps direct the coolant upward into the fuel bundle chamber 176, as illustrated by arrows 198 (Figure 5d). Alternatively, instead of allowing the coolant to flow out of the inner conduit 172 and into the closed end 194 of the pressure tube 162, the bottom end of the liner tube 174 may be closed to contain the coolant. Referring to Figure 5e, in this configuration coolant flowing out of the inner conduit 172, shown using arrow 190, flows into and is contained by the closed liner tube 174. The closed end of the liner tube 174 then helps direct the coolant upward into the fuel bundle chamber 176, as illustrated by arrows 198. The pressure tube 162 may be formed from any material having a desired combination of mechanical strength and low neutron-absorption cross section, including, for example zirconium based alloys.

Referring to Figure 2, in the illustrated example, the liner tube 174 has a first or upper end 200 that is fluidly connected to the coolant outlet plenum 124 and serves as the fuel channel assembly coolant outlet 158, and a second or lower end 202 that is axially spaced apart from the upper end by an axial liner tube length 204 (Figure 5a). The length 204 may be selected to be any suitable length that is compatible with other components of the reactor 100, and may be, for example, between about 1 m and about 10 m, between about 4 m and about 6 m, and may be about 5 m.

Referring to Figure 8, the lower portion 184 of liner tube 174 has a lower tube diameter 206. The lower tube diameter 206 may be selected to be any suitable size which is sufficient to slidingly or removably receive a corresponding fuel bundle 160 (e.g. is at least as large as the fuel bundle outer diameter 208) and which, when arranged in combination with the coolant downflow tube, provides a fuel bundle chamber of sufficient width to fit the fuel bundle. For example, the lower tube diameter may be between about 0.05 m and about 0.75 m, between about 0.10 m and about 0.30 m, and may be about 0.14 m to about 0.15m. Optionally, the lower tube diameter 206 may be about 0.145m.

In the illustrated example, the upper portion 188 of the liner tube 174 has an upper diameter 210, that is smaller than the lower diameter 206, and the coupling 186 provides a transition between the lower diameter 206 and upper diameter 210. Optionally, the upper diameter 210 may be selected so that it is smaller than the outer diameter 208 of the fuel bundle 160. Alternatively, the upper diameter 210 may be generally equal to or larger than the lower diameter 206.

Providing a smaller upper diameter 210 may affect the flow of coolant within the liner tube 174. For example, the narrowing of the liner tube 174 may increase the velocity of the coolant as it flows through the upper portion 188, relative to the lower portion 184. If the upper diameter 210 is smaller than the fuel bundle outer diameter 208, providing a coupling 186 that is separable from the lower portion 184 may help facilitate insertion and/or removal of the fuel bundle 160 from the lower portion 184. Once assembled, the liner tube 174, coolant downflow tube 172 and fuel bundle 160 may be manipulated as a single unit for insertion into and/or removal from the pressure tube 162.

Referring to Figure 6, in the illustrated example, the coupling 186 comprises a plurality of coolant inlet ports 212, that can be fluidly connected to the coolant downflow tube 172 as explained herein, to help facilitate the flow of coolant from the inlet plenum 120, through the sidewall 214 of the liner tube 174 and into the coolant downflow tube 172. The liner tube 174 may include any desired number of inlet ports 212, and the inlet ports may be of any suitable shape. Optionally, the inlet ports 212 may be provided on any portion of the liner tube 174, and need not be provided on the coupling 186.

The liner tube 174 may be formed from any suitable material that has sufficient mechanical strength and is able to withstand the outlet coolant conditions (optionally high temperature and high pressure). Optionally, as the lower portion 184 is to be positioned within the reactor core and exposed to neutron flux, the lower portion 184 may be made from a material that has a desirably low neutron absorption cross-section, including, for example, zirconium alloys.

Optionally, some or all of the liner tube 174 may be insulated to help inhibit heat transfer across the sidewall 214. Insulating the liner tube 174 may help reduce thermal stresses on the liner tube 174, and may help reduce transfer of heat from the liner tube 174 to other components of the fuel channel assembly 150, such as the surrounding pressure tube 162. In the illustrated example, the pressure tube 162 is submerged in the moderator which is at a relatively lower temperature, while the coolant flowing through the fuel channel assembly 150 is heated to a substantially hotter temperature. Reducing the heat transfer from the liner tube 174 to the surrounding pressure tube 162 may help reduce the thermal gradient, and resulting stresses, faced by the pressure tube 162.

Referring to Figure 6, in the illustrated example, the fuel channel assembly 150 includes an insulator 216 that is sized to be received the lower portion 184 of the liner tube 174. The insulator 216 has an inner diameter 218 sized to closely receive the lower portion 184, and an outer diameter 220 sized to fit within the pressure tube 162. Preferably, the insulator 216 fits relatively snugly around the outer surface of the lower portion 184 to help encourage coolant to flow upwards within the liner tube 174, as opposed to flowing in an annular space created between the lower portion 184 and the insulator 216. Alternatively, the insulator may be provided on the outside of the pressure tube 162.

Optionally, the insulator 216 may be fixedly attached to the liner tube 174, or may be separable or removable from the liner tube 174. Fixing the insulator 216 to the liner tube 174 may help simplify handling and position of the liner tube 174 and insulator 216 within the pressure tube 162. Providing the insulator 216 as a separate member may allow for the insulator 216 to be separately positioned, inspected and/or replaced independent of the liner tube or other fuel channel assembly components. The insulator 216 may be formed from any suitable material having desired heat insulating properties, and optionally desirable neutron absorption-cross section properties, including, for example ceramic materials and refractory materials. Optionally, the insulator 216 may be provided in two or more separate elements/ parts.

A separate upper insulator 224 (Figure 8) may be provided in the upper portion 188 of the liner tube 174. Referring to Figure 3, in the illustrated example, the upper portion 188 of the liner tube 174 passes through the inlet plenum 120, which contains coolant at a lower temperature than the coolant flowing in the upper section of the liner tube. Providing insulation in the upper portion 188 of the liner tube 174 may help reduce heat transfer from the coolant in the upper portion 188 to the coolant in the inlet plenum 120, and/or may help reduce thermal stresses on the upper portion 188. As an alternative to, or in addition to providing a separate insulator member, some or all of the components of the fuel channel assembly may be provided with other insulating or heat transfer controlling treatments and/or coatings or may be otherwise configured to help reduce heat transfer.

In some configurations, the bottom wall 128 of the outlet plenum may be exposed to higher temperatures than the tubesheet 114 and may thermally expand in the lateral direction by a different amount than the tubesheet 114. Differences in thermal expansion between the bottom wall and the tubesheet may cause the apertures 148 in the bottom wall 128 to laterally shift relative to the corresponding apertures 164 in the tubesheet 114. Such shifts may cause slight misalignment between the bottom wall apertures 148 and the tubesheet apertures 164, which may exert bending forces portions of the fuel channel assembly 150, for example the pressure tube 162, extending between the apertures 148, 164. Optionally, the connection between the pressure tube 162 and the bottom wall 128 can be configured to accommodate for such misalignment. Referring to Figure 3, in the illustrated example, a bellows member 226 is used to connect the upper end 228 of the pressure tube 162 to the bottom wall 128. The bellows 226 is designed to be more flexible than the pressure tube 162 and to deform resiliently to account for small amounts of lateral misalignment. Alternatively, another resilient or compliant type of connector may be used to provide a suitably accommodating connection.

In the illustrated example, the upper end 228 of the pressure tube 162 is sealingly connected to the bottom wall 128 of the outlet plenum 124 using any suitable seal, including, for example, including rolled joints, welded joints, mechanical coupling and explosion bonding. Optionally, an upper portion 230 of the pressure tube 162, referred to as a pressure tube extension 230 (a portion of the pressure tube not submerged in the moderator) may be formed from a different material than the lower portion 232 of the pressure tube 162. For example, the lower portion 232 of the pressure tube 162 may be formed from a zirconium alloy (having a desirable neutron absorption cross-section) and the pressure tube extension 230 may be formed from stainless steel, or other non-zirconium based metals. Using different materials for the lower portion 232 of the pressure tube and the pressure tube extension 230 may allow each portion of the tube 162 to be formed from a material having different, desirable properties.

Optionally, the two portions 230 and 232 may be integrally formed so that the pressure tube 162 is of unitary one-piece construction. This may include pressure tubes 162 in which the portions 230 and 232 are different materials but are bonded in such a way that they cannot be readily separated from each other. Optionally, the two portions 230, 232 of the pressure tube 162 may be joined together using any suitable technique or mechanism. In the illustrated example, the lower portion 232 and the pressure tube extension 230 are joined via co-extrusion, which provides a bond of sufficient strength and produces a generally integrally formed pressure tube 162.

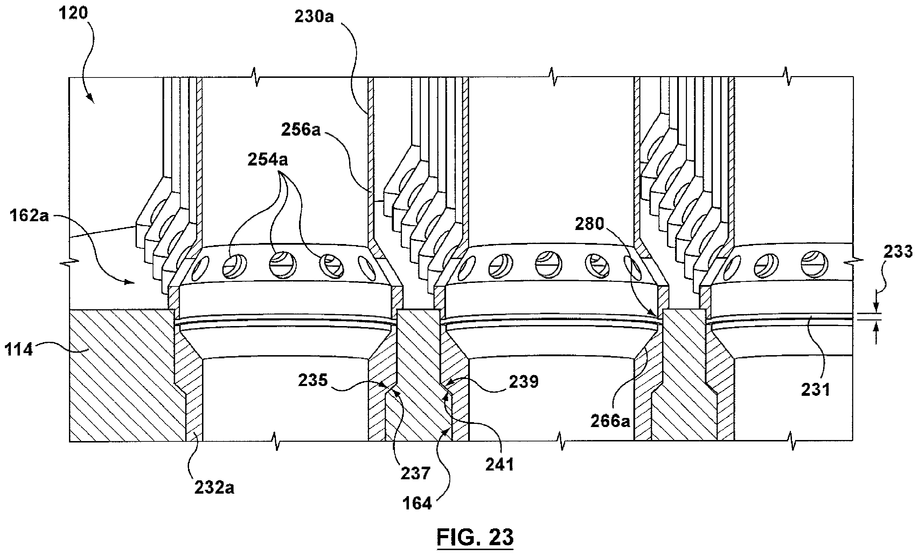

Alternatively, the two portions 230 and 232 may be separate members that are positioned adjacent each other and aligned to provide a generally continuous pressure tube 162a, but need not necessarily be directly coupled to each other. Referring to Figure 23, another example of a pressure tube 162a includes a pressure tube extension 230a that is fabricated as a separate component from the lower portion 232a. The pressure tube 162a is generally similar to pressure tube 162, and analogous features are referenced using like reference characters with an "a" suffix.

In this embodiment, the pressure tube extension 230a is not directly joined to the lower portion 232a. In the illustrated example, a gap 231 is formed between the lower end of the pressure tube extension 230a and the upper end of the lower portion 232a. The gap 231 defines a height or offset spacing 233 between the two portions 230a and 232a. The size of the offset spacing 233 may be any suitable distance, including, for example between about 0mm (no gap, where the portions touch each other but are not joined together) and about 25mm or more. Optionally, some or all of the gap 231 may be filled with weldment or other materials, and the gap need not be a fully open channel or groove. Using this configuration separates the sealing (leak-tightness) aspects of the pressure tube 162a from the load bearing aspects of the pressure tube 162a. Separating the functional aspects of the pressure tube 162a may help simplify the design and construction of the pressure tube 162a and assembly of the reactor, and may help increase reliability of the fuel channel assembly.

In the illustrated embodiment, the pressure tube extension 230a is provided as a separate member that extends from the bottom wall 128 of the second plenum chamber 126 (see Figure 3) to the upper side of the tubesheet 114. In this illustration the tubesheet 114 is shown as being generally flat or planar (as opposed to the curved shape shown in Figure 3). The tubesheet 114 used with any embodiment of the fuel channel assembly described herein may be of any suitable configuration.

The pressure tube extension 230a can be joined to both the bottom wall 128 and the tubesheet 114 using any suitable, fluid tight connection. This connection provides the liquid-tight seal between the fuel channel chamber 176 and the first plenum chamber 120. In the illustrated example, the lower rim 280 of the pressure tube extension 230a is welded to the tubesheet 114. The lower rim 280 may be welded around its outer perimeter (on the surface of the tubesheet 114), around its inner perimeter (within the apertures 164) or a combination of both locations.

The lower portion 232a of the pressure tube 162a is positioned within a corresponding opening 164 in the tubesheet 114. The upper end of the lower portion 232a is joined to the tubesheet 114 using any suitable joint. In the illustrated example, the upper end is pressure rolled to the tubeheet 114. The lower portion 232a of the pressure tube 162a includes a generally outwardly projection shoulder portion 235 that is configured to abut and bear against a corresponding seat portion 237 of the tubesheet 114. The weight of the pressure tube 162a, along with the contents of the pressure rube 162a including the fuel channel assembly and coolant, is at least partially carried by the shoulder 265 and transferred to the tubesheet 114 via the seat portion 237. Optionally, the shoulder 235 and seat 237 may carry all, or substantially all of the load/ weight of the pressure tube 162a. In the example illustrated, both the shoulder portion 235 extends around the entire perimeter of the lower portion 232a, and includes an engagement surface 239 that is inclined relative to the fuel channel axis 170. The sear portion 237 includes a complimentary bearing surface 241, which is also inclined relative to the fuel channel axis 170. Alternatively, the shoulder portion 235 need not extend continuously around the perimeter of the lower portion 232a, and the engagement surface 239 (an complimentary bearing surface 241) may be in any suitable orientation and need not be inclined as illustrated.

Optionally, the material used to form the pressure tube extension 162 may be selected so that it has a thermal expansion co-efficient that is generally equal to, or is within about 5% to about 40% of the thermal expansion co-efficient of the bottom wall 128 of the outlet plenum 124. This may help reduce the magnitude of stresses at the joint between the pressure tube extension 230 and the bottom wall 128 caused by differences in the amount of thermal expansion between the bottom wall 128 and the pressure tube extension 230.

Referring to Figure 8, the coolant downflow tube 172 has a first or upper end 234 and is fluidly connected to the inlet plenum 120 and a second or lower end 236 that is axially spaced apart from the upper end by a downflow tube length 238. The downflow tube length 238 may be selected so that the coolant downflow tube 172 will fit within the liner tube 174 and will extend through the entire length 240 of the fuel bundle 160, so that the lower end 236 of the coolant downflow tube 172 reaches, and optionally extends axially beyond the lower face 242 of the fuel bundle 160 in the fuel channel assembly 150 by an extension length 244 (Figure 2). The extension length 244 may be any suitable length based on the overall dimensions of the fuel channel assembly 150 and reactor 100, and in the illustrated example may be between about 0.01 m and about 0.15 m, between about 0.02 m and about 0.1 m and may be about 0.06 m.

Extending the coolant downflow tube 172 beyond the lower face 242 of the fuel bundle 160 may help balance the distribution of coolant flow within the fuel bundle chamber 176 before it reaches the lower face 242 of the fuel bundle 160. Optionally, one or more flow directors (not shown), including for example a baffle, vane, guide or other flow directing apparatus, may be provided axially between the lower face 242 of the fuel bundle 160 and the lower end 236 of the coolant downflow tube 172 to help modify or balance the coolant flow as it enters the fuel bundle chamber 176. Extending the coolant downflow tube 172 beyond the lower face 242 of the fuel bundle 160 may also help accommodate thermal expansion (lengthening) and/or creep of the fuel bundle 160 when the reactor 100 is in use, to help provide coolant flow to the lowermost portion of the fuel bundle 160.

Referring to Figure 2, in the illustrated example, the upper end 234 of the coolant downflow tube 172 serves as the coolant inlet 156 for the fuel channel assembly 150, and is connected to the inlet plenum 120 to receive coolant.

Referring to Figure 8, the downflow tube 172 has a diameter 246 that may be any suitable size that is compatible with the size and shape internal passage 180 in the fuel bundle 160 and that will cooperate with the liner tube 174 to provide an annular fuel bundle chamber 176 of desired size. For example, the diameter 246 may be between about 0.01 m and about 0.3 m, between about 0.03 m and about 0.15 m, between about 0.09m and about 0.1 m and may be about 0.094m. The coolant downflow tube 172 may be a generally continuous tube, or alternatively may be formed from two or more conduit sections joined together using any suitable connection mechanism.

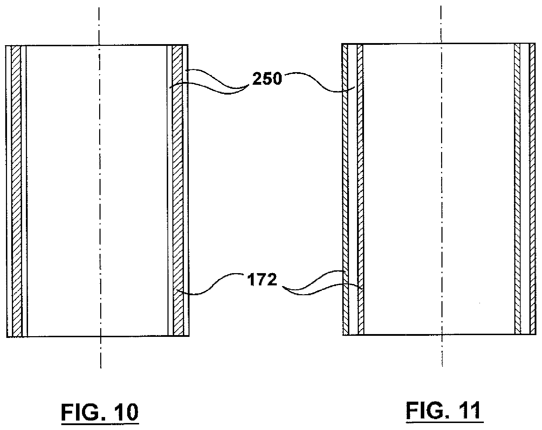

Optionally, the coolant downflow tube 172 may be generally fluid tight along its length to transport coolant fluid from is upper end 234 to its lower end 236 without allowing a substantial amount of the coolant to escape and mix into the fuel bundle chamber 176, until the coolant exits the lower end 236 of the coolant downflow tube 172. Optionally, the thermal stresses in the coolant downflow tube 172 (and optionally any other portion of the fuel assembly 151 or fuel channel assembly 150) may be managed by applying a coating of heat resistant material 250 to the exterior surfaces of the conduit 172 (Figure 10), layering and providing the coolant downflow tube as a double-walled conduit with sandwiching a heat resistant material 250 (Figure 11) and appropriate material selection (e.g. materials with high strength, high fatigue resistance, low thermal expansion and/or a combination thereof).

Referring to Figures 5a-5d, in the illustrated example, the coolant can flow downwardly from the inlet plenum 120 to the lower end 236 of the coolant downflow tube 172 without contacting or mixing with the fuel bundles 160 in the fuel bundle chamber 176, as illustrated by arrows 190, and can then be redirected after exiting the coolant downflow tube 172 to flow upwardly through the fuel bundle chamber 176 toward the upper end 200 of the liner tube 174, as illustrated using arrows 198. This configuration may allow coolant to circulate from the coolant inlet plenum 120 to the coolant outlet plenum 124 through both the coolant downflow tube 172 and the small annular gaps between the liner tube 174 and the pressure tube.

Referring to Figure 5d, in the illustrated example, the lower end 236 of the coolant downflow tube 172 is located within the liner tube 174, and is positioned above the lower end 202 of the liner tube 174. Alternatively, the lower end 236 of the coolant downflow tube 172 may be positioned outside the liner tube 174, below lower end 202.

In the illustrated example, coolant 190 flowing downwardly is substantially contained within the coolant downflow tube 172 and will not contact the fuel bundles 160. This configuration may help reduce the amount of heat transfer between the fuel bundles 160 and the coolant in the coolant downflow tube 172 so that the temperature of the coolant exiting the bottom 236 of the coolant flow tube 172 is within about 2°C and about 50°C degrees of the coolant in the inlet plenum 120. Optionally, the coolant downflow tube 172 may be insulated, in any suitable manner, to help further reduce the heat transfer between the coolant within the coolant downflow tube 172 and the fuel bundles 160 and coolant 198 flowing in the fuel bundle chamber 176. Optionally, the reactor 100 can be configured so that the velocity of coolant flowing downwardly within the coolant downflow tube 172 is between about 1 m/s and about 10 m/s, and in the illustrated example may be about 5 m/s.

Once expelled from the coolant downflow tube 172, the coolant will flow upward through the fuel bundle chamber 176 while contacting the fuel bundles 160. In this configuration, the coolant is flowing upwards (arrows 198) while it is being heated by the fuel elements 270. In some configurations, the coolant may enter the fuel bundle chamber 176 as a liquid and become a two-phase fluid and/or supercritical fluid as it is heated by the fuel bundle 160. Delivering relatively cool coolant to the bottom of the fuel bundle chamber 176, and configuring the coolant to flow upward while in contact with the fuel bundles 160 may help improve the thermal stability of the coolant flow and/or other unwanted flow effects. For example, as the coolant flows through the fuel bundle chamber 176 it is heated by contact with the fuel bundles 160. The heated fluid may be less dense and/or in a different phase than the incoming fluid which may tend to urge the heated fluid upward within the fuel bundle chamber 176. In the illustrated example, the pressure differential acting on the coolant also tends to urge the coolant to flow upward through the fuel bundle chamber 176. Configuring the fuel channel assembly so that the thermal and pressure forces tend to act in concert, e.g. both urge the coolant to flow upwards, may help stabilize the coolant flow. Optionally, the reactor 100 may be configured so that the velocity of coolant flowing upwardly through the fuel bundle chamber 176 (for example water or molten salts or metals) is between about 2 m/s and about 20 m/s or more, and in the illustrated example may be between about 15 m/s and about 20 m/s.

Referring to Figure 3 and Figure 8, in the illustrated example the upper end 234 of the coolant downflow tube 172 is located within the liner tube 174 and is located below the upper end 200 of the liner tube 174. To provide fluid communication between the inlet plenum 120 and the upper end 234 of the coolant downflow tube 172, the inlet ports 212 are connected to the coolant downflow tube 172 by feeder conduits 252. The feeder conduits 252 provide a fluid-sealed connection between the inlet ports 212 and the coolant downflow tube 172.

In the illustrated example, portions of the liner tube 174 extending through the inlet plenum 120 are shrouded by the insulator and the pressure tube 162. A plurality of coolant apertures 254 are provided in the sidewall 256 of the pressure tube 162 to allow coolant fluid from the inlet plenum 120 to pass through the sidewall 256 and flow into the annular chamber 258 defined between the pressure tube 162 and the liner tube 174. The chamber 258 surrounds the inlet ports 212 in the liner tube sidewall 214, and coolant from the chamber 258 can flow into the ports 212 and into the coolant downflow tube 172.

The upper end of the chamber 258 is bounded by the flange 260 on the liner tube 174 that is connected to the pressure tube 162. In the illustrated example, the connection between the flange 260 and pressure tube 162 may be substantially sealed so that coolant in the chamber 258 is unlikely to flow upwards into upper chamber 264 instead of flowing down into the coolant downflow tube 172. In the illustrated example, the flange 260 is configured to rest on a supporting shoulder 266 on the pressure tube 162 and is threading engaged with the inner surface of the pressure tube 162. In this configuration, the connection between the flange 260 and the pressure tube 162 is the primary mechanical connection between the liner tube 174 and the pressure tube 162 and is adapted to support substantially all of the weight of the fuel assembly 151. Alternatively, the connection between the liner tube 174 and pressure tube 162 may be of any suitable configuration and optionally additional support members may be provided to help support the weight of the liner tube, fuel bundle and/or coolant downflow tube.

In the illustrated example, the lower end of the chamber 258 is not sealed with a fluid tight seal. Instead, annular gaps may be provided between the liner tube 174 and the insulator 216 and/or between the insulator 216 and the pressure tube 162. Providing such gaps may help facilitate insertion and removal of the liner tube 174 and/or insulator 216 within the pressure tube 162. The size of the gaps may be controlled by varying the relative sizes of the liner tube 174 and the pressure tube 162 and/or insulator 216. Preferably, the gap may be relatively small so that it will have a relatively higher flow resistance than the feeder conduits 252 such that it provides a torturous flow path for the coolant in the chamber 258 and only a small amount of coolant will exit the chamber 258 via the gap and flow into the annular space between the liner tube 174 and the pressure 162 tube and/or insulator 216.

While illustrated as generally oval apertures, the coolant apertures 254 may be of any suitable shape and configuration. For example, the coolant apertures 254 may be generally circular openings, an example of which is illustrated as apertures 254a in Figure 23. The size and number of coolant apertures 254 may be selected based on a variety of factors, including, for example the desired coolant flow rate, the strength of the pressure tube sidewall 256 and the position and configuration of the inlet ports 212 on the liner tube sidewall 214.

Optionally, the coolant apertures 254 may be positioned toward the bottom of the inlet plenum (e.g. generally adjacent the tubesheet 114). Positioning the coolant apertures 254 toward the bottom of the coolant plenum may help facilitate coolant in the inlet plenum flowing into the fuel channel assemblies 150 by gravity in the event of power loss or during accident conditions and circulating through the channels 150 via natural circulation driven by the heating of the coolant within the fuel bundle chamber 176.

In the illustrated example, the fuel channel assemblies 150 are shown being generally constantly spaced apart from each other and being of generally the same size and shape. Alternatively, the fuel channel assemblies in the reactor 100 may be of different sizes and shapes, and may not be uniformly spaced within the reactor 100.

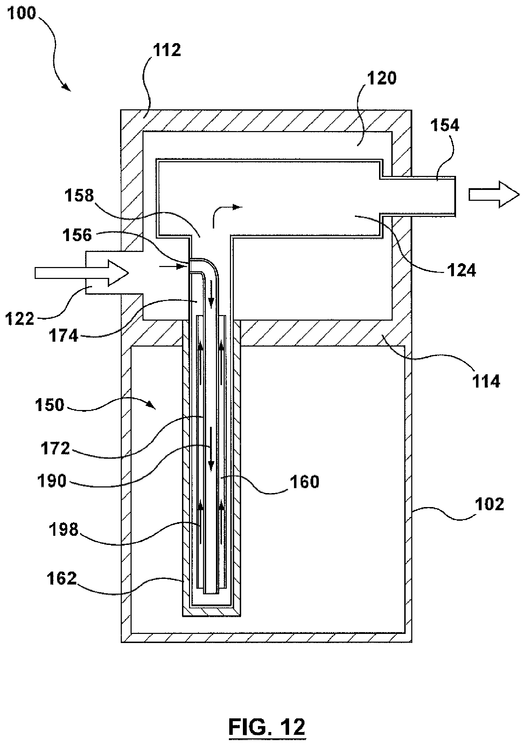

A schematic representation of coolant flow through reactor 100 and fuel channel assembly 150 is illustrated in Figure 12.

Referring to Figures 8 and 9, an example of a nuclear fuel bundle that is compatible with the fuel channel assembly 150 includes a first end face 242 and a second end face 268 axially spaced apart from the first end face 242, along the fuel bundle axis 182, by the bundle length 240. The bundle length 240 may be any suitable length, and may be between about 0.2 m and about 5 m or more. Optionally, the fuel bundle 160 may be a single continuous bundle or may be made up of multiple, separate bundle portions.

In the illustrated example, the fuel bundle 160 includes a plurality of elongated nuclear fuel elements 270 that extend axially within the fuel bundle 160. Each fuel element 270 contains one or more pellets of nuclear fuel material. The nuclear fuel in the bundle 160 may be any fuel suitable for burning in a pressure-tube reactor, including, for example, natural uranium, enriched uranium, plutonium, thorium, mixtures thereof, and any other suitable, fissile fuel. In the illustrated example, the fuel bundle 160 is of generally circular axial cross-sectional area, and is generally rotationally symmetrical about axis 178.

The plurality of fuel elements 270 are connected to each other and supported by at least one spacer 272. Spacers 272 may be provided at desired intervals along the length of the fuel bundle, and may be provided on the end faces 242, 268 of the fuel bundle (where they may be referred to as end caps or end plates). In the illustrated example, the spacer 272 includes a plurality of ring members 274, each supporting a respective plurality of fuel elements 270. In this example, the fuel elements 270 are held generally parallel to and laterally spaced apart from each other. The fuel elements 270 and spacers 272 are sized and configured so that the outer diameter 208 of the fuel bundle 160 is within an acceptable range such that the fuel bundle 160 can be removably received within the liner tube 174.

In the present example, the fuel bundle 160 contains fuel elements 270a and 270b having different axial cross-sectional areas. In the illustrated example, the fuel elements are configured into three, generally concentric rings. The fuel elements 270a in the two inner rings are generally the same size and the fuel elements 270b in the outer ring are smaller. Providing smaller fuel elements 270b in the outer ring may affect the heat transfer from the fuel bundle 160 to the coolant, and may affect the burn time and temperature of the fuel elements. The number of fuel elements 270 in the bundle, their relative sizes and relative positioning may be varied to achieve different fuel bundle performance characteristics. Optionally, the smaller fuel elements 270b may be located at an inboard position within the fuel bundle 160, or any other suitable position.

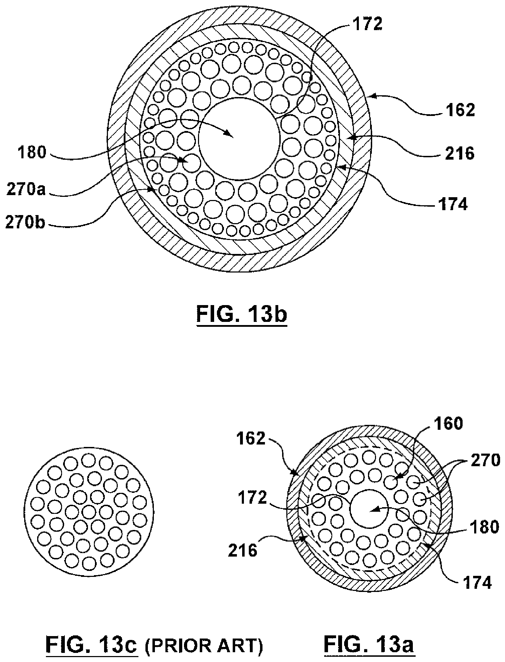

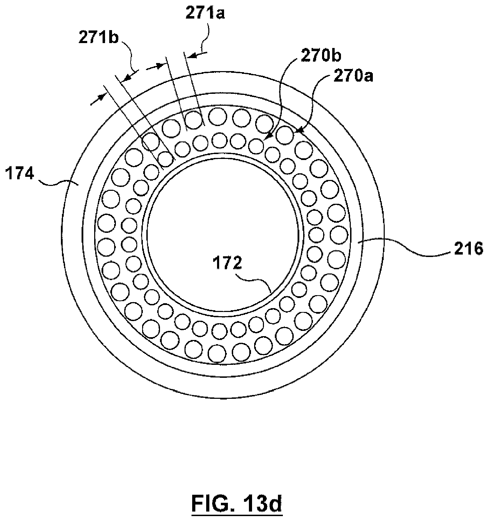

Alternatively, referring to Figure 13b, a schematic representation of cross-sectional view of the fuel bundle 160 illustrates the fuel elements 270a and 270b having different cross-sectional areas arranged concentrically about the passage 180 containing the coolant downflow tube 172. Referring to Figure 13a, a schematic representation of cross-sectional view of another example of a fuel bundle 160 includes fuel elements 270 that are configured so that they are generally identical to each other, and have a generally equal axial cross-sectional area. Optionally, referring to Figure 13d, a fuel bundle 160 may include two concentric rings of fuel elements 270a and 270b in which the fuel elements 270a in the outer ring have a larger diameter than the fuel elements 270b. The diameter 271b of the smaller, inner fuel elements 270b may be between about 75% and about 99% of the diameter 271a of the outer fuel elements 270a, and may be between about 92% and about 95% of the diameter 271a. The diameters 217a and 271b may be any suitable size that is compatible with a given reactor/ fuel bundle design, and may be, for example, between about 6mm and about 15mm. Alternatively, the diameters 271a and 271b may be less than 6mm or greater than 15mm. In the illustrate example, the diameter 271b of the smaller fuel elements 270b is about 8.3mm, and the diameter 271a is about 8.8mm. For reference, and example of a known fuel bundle, without a centre passage 180 for accommodating the coolant downflow tube 172, is illustrated in Figure 13c.

To facilitate insertion into the generally annular fuel bundle chamber 176, the fuel bundle 160 may include one or more conduits or passages to receive the coolant downflow tube 172. Referring to Figure 9, in the illustrated example, the fuel bundle 160 passage 180 extends axially through the fuel bundle 160 between a first aperture in the first end face 242 and a second aperture 276 (illustrated by a dashed line) in the second end face 268. The apertures may be holes or other openings in a spacer 272 or fuel bundle end plate, or alternatively may be voids or gaps provided by the absence of fuel elements 270 in a given portion of the fuel bundle 160. The lateral sides of the passage may be at least partially bound by the surrounding fuel elements 270 and the passage need not include a continuous, physical sidewall. Spacers 272, including the fuel bundle end caps, may be configured such that they each include a corresponding spacer aperture, or gap to accommodate axial insertion of the coolant downflow tube 172 through the spacers.

In the illustrated example, the coolant tube passage 180 has a passage diameter 278 that is sized to be generally equal to or larger than the coolant downflow tube diameter 246. In this configuration, the passage 180 is sized to removably receive the coolant fluid downflow tube 172 provided in the fuel channel assembly when the fuel bundle is inserted into the fuel bundle cavity. Preferably, the tube passage 180 extends the entire length of the fuel bundle 160, from the first end face 242 to the second end face 268, to enable the coolant fluid downflow tube 172 to pass through the fuel bundle 160.

In the illustrated example, the passage 180 is generally centred within the bundle 160, e.g. is coaxial with the fuel bundle axis 182, and the plurality of fuel elements 270 are positioned to laterally surround the coolant fluid downflow tube 172 when the fuel bundle is received within the fuel channel assembly 150. When installed within the fuel bundle chamber 176, the fuel bundle 160 is coaxial with the coolant downflow tube 172, the liner tube 174 and the pressure tube 162. Alternatively, if intended to be used with differently configured fuel channel assemblies, the passage 180 may not be centered within the fuel bundle.

The passage 180 has an axial cross-sectional area that is less than the axial cross-sectional area of the complete fuel bundle. Optionally, the cross-sectional area of the passage may be between about 10% and about 50%, or more of the fuel bundle cross-sectional area. Optionally, the passage axial cross-sectional area that is greater than the axial cross-sectional area of at least some of the fuel elements. In the illustrated example, the passage cross-sectional area is between about 150% and about 400%, or more of the cross-sectional area of the fuel elements.

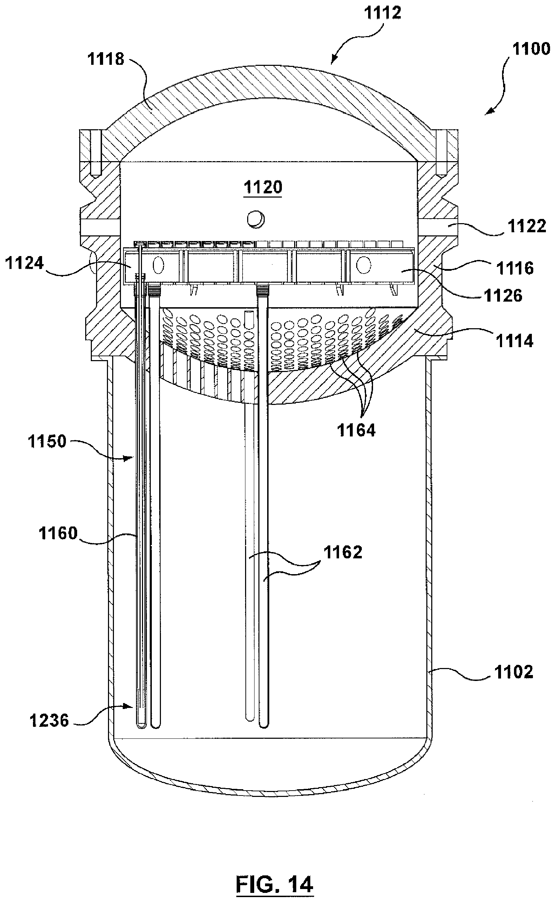

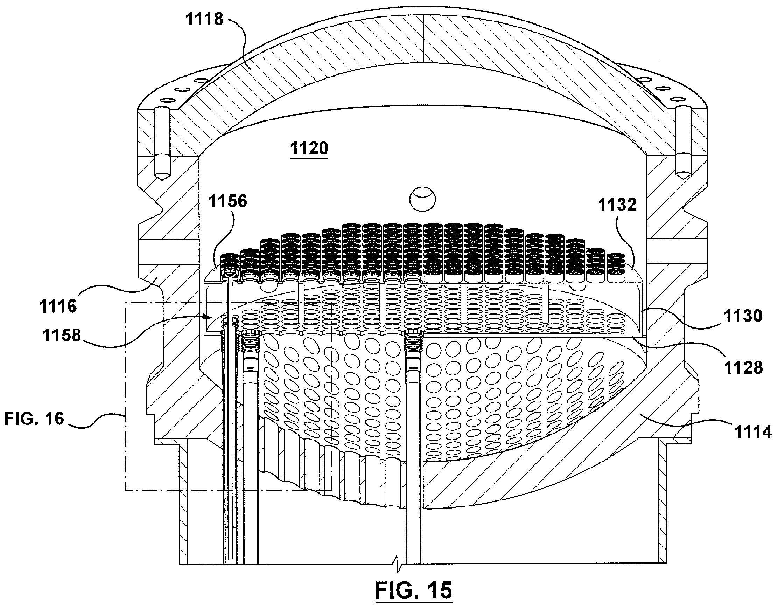

Referring to Figure 14 and Figure 15, another example of a nuclear reactor 1100 includes a calandria 1102 containing a moderator, and a plenum vessel 1112. The reactor 1100 is generally similar to the reactor 100, and like features are identified by like reference numerals indexed by 1000.

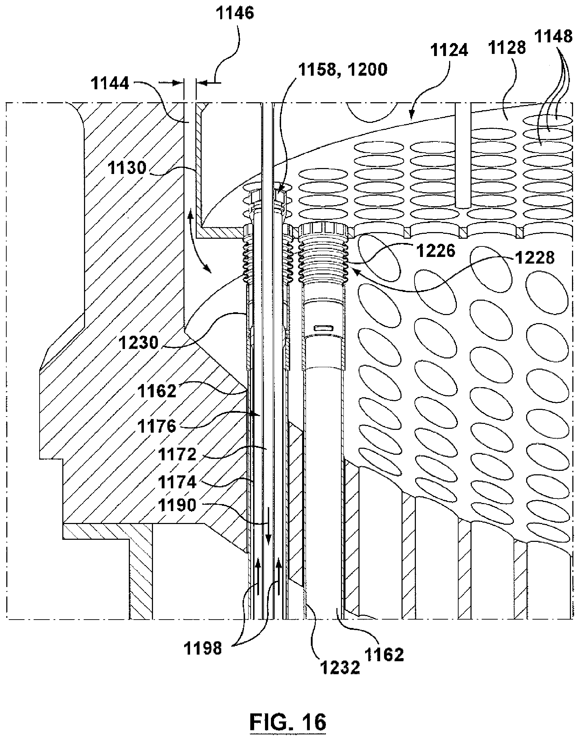

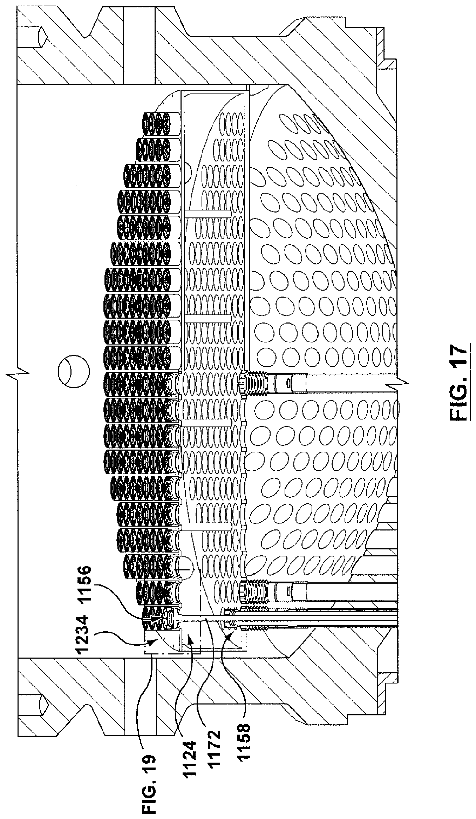

Referring to Figures 16 and 17, in the illustrated example, the fuel channel assembly 1150 is configured so that a portion of the coolant downflow tube 1172 extends through the interior 1126 of the outlet plenum 1124 and is coupled to the lid 1132 of the outlet plenum 1124, in fluid communication with the inlet plenum 1120. In this configuration the coolant inlet 1156 of the fuel channel assembly 1150 (the upper end 1234 of the coolant downflow tube 1172) is located outside the liner tube 1174 and above the coolant outlet 1158 (the upper end 1200 of the liner tube1174). Optionally, the portion of the coolant downflow tube 1172 extending through the outlet plenum 1124 can be thermally insulated, using any suitable mechanism including those described herein, to help reduce heat transfer and thermal stresses. In this configuration, neither the liner tube 1174 nor the pressure tube 1162 need to be provided with apertures or ports to allow coolant to flow through the sidewalls thereof.

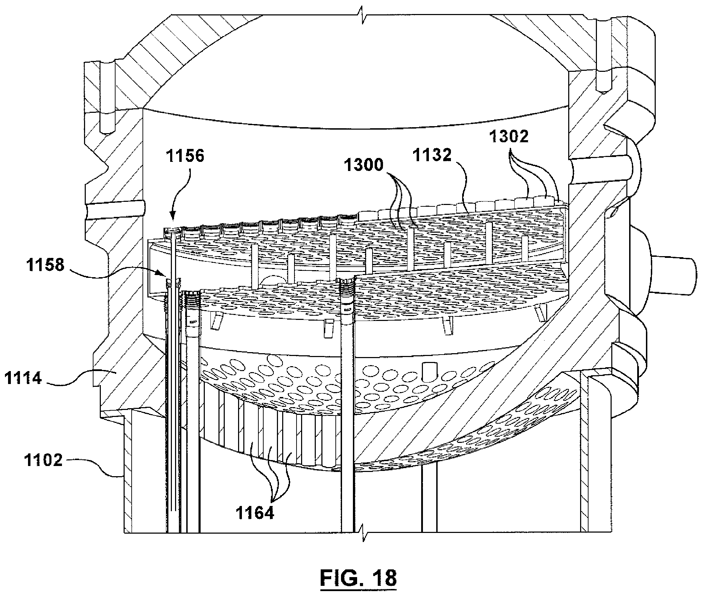

Referring to Figure 18, in this example the lid 1132 of the upper plenum 1124 is provided with a plurality of openings 1300 to receive respective coolant downflow tubes 1172. The coolant downflow tubes 1172 may be connected, and sealed to the lid 1132 using any suitable coupling or mechanism.

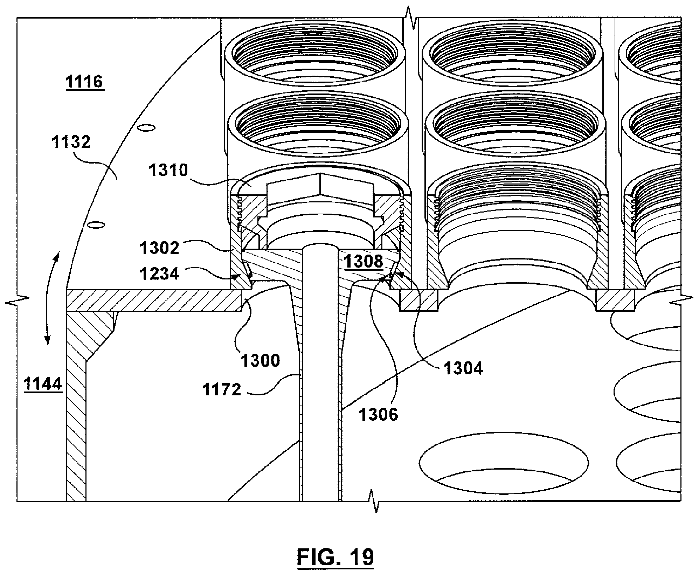

Referring to Figure 19, in the illustrated example, each opening 1300 is provided with a mounting collar 1302 that is welded (or otherwise fixedly coupled) to the upper surface of the lid 1132. The collar 1302 includes a frusto-conical seal face 1304 that is configured to mate with a corresponding angled seal face 1306 provided on a flange 1308 on the coolant downflow tube 1172. Optionally, the seal face 1306 can include a groove or other recess for receiving a metallic C-ring or other sealing member. Alternatively, the faces 1304, 1306 can be configured such that contact between the metal faces provides a generally fluid tight seal. A compression member 1310 is threadingly received within each collar 1302. Torque applied to the compression member 1310 can be converted to axial compression force acting on the flange 1308, thereby urging the mating seal faces 1304, 1306 together. Alternatively, the collars 1302 may be integrally formed/ machined with the lid 1132. This configuration may eliminate the need to couple and seal the collars to the lid 1132.

In this configuration coolant downflow tube 1172 can be removed from the liner tube 1174 without requiring disassembly of the liner tube 1174. This may enable all of the coolant downflow tubes 1172 to be removed from their respective liner tubes 1174 by lifting the outlet plenum 1124 out of the plenum vessel 1112, optionally without having to remove the lid 1132 of the outlet plenum 1124. Alternatively, the coolant downflow tubes 1172 may be removed by removing the lid 1132 of the outlet plenum 1124 and leaving the rest of the outlet plenum 1124 in place. This may help facilitate refuelling and maintenance of the liner tubes 1174 and/or pressure tubes 1162.

Alternatively, the coolant flow tubes 1172 and liner tubes 1174 may be connected to the outlet plenum 1124 to form a fuel assembly such that the whole assembly, including the fuel bundle 1160, coolant downflow tube 1172 and liner tube 1174, can be removed in a single operation, leaving the pressure tubes 1162 in place.

In the illustrated example, the coolant downflow tube 1172 can be formed from a material that is sufficiently flexible to allow a slight misalignment between the lid 1132 of the outlet plenum 1124 and the interior of the liner tube 1174 and the passage 1180 in the fuel bundle while the reactor 1100 is in use.

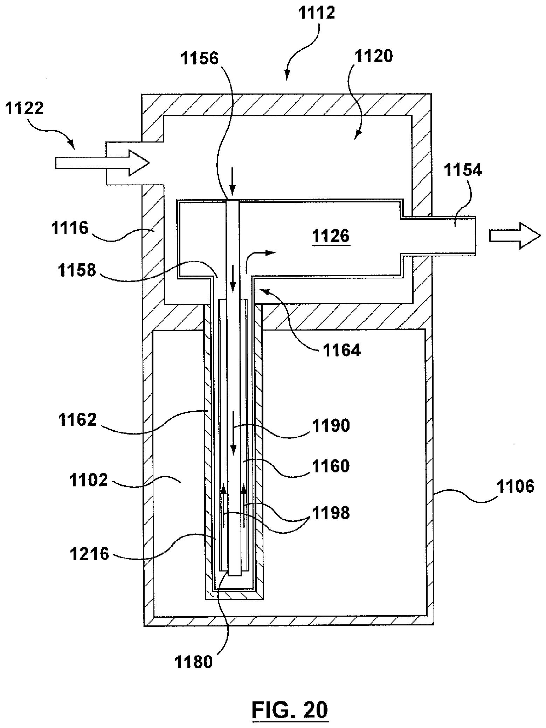

A schematic representation of the coolant flow through the reactor 1100 is show in Figure 20.

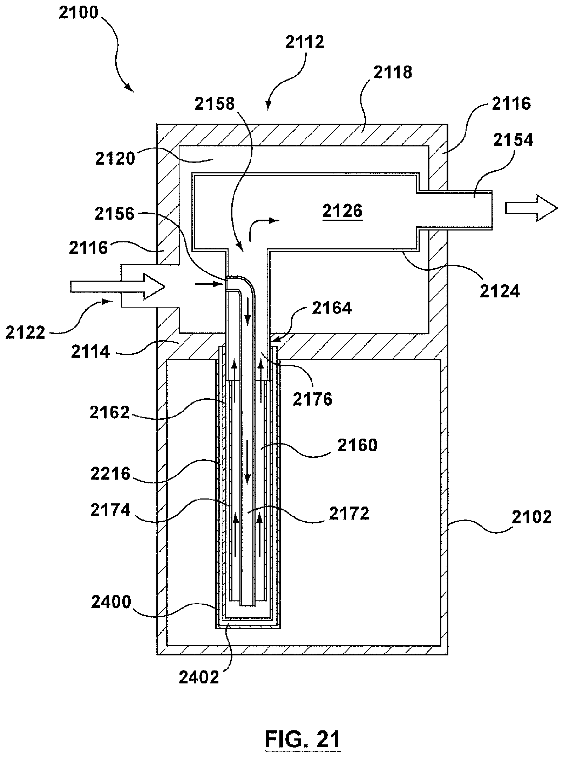

Referring to Figure 21, another example of a reactor 2100 is schematically illustrated. The reactor 2100 is generally similar to the reactor 100, and like features are identified by like reference numerals indexed by 2000.

In reactor 2100, the insulator 2216 in the fuel channel assembly 2150 is provided outside the pressure tube 2162 (e.g. between the pressure tube 2162 and the moderator). In this configuration, the pressure tubes 2162 will operate a higher temperature than the pressure tubes in reactors 100 or 1100 as they are directly exposed to the high temperature coolant flow. This design may be suitable for using in reactors in which the operating temperatures of the coolant flow are within the range of operability for the desired pressure tube material, which may be a zirconium based alloy. For traditional zirconium alloy pressure tubes, a practical upper limit for the operating temperature may be about 350°C or less (at about 16.5 MPa saturation pressure). The use of an external insulator 2216 may help facilitate the use of a low temperature and low pressure moderator.

Optionally, under suitable operating conditions (for example when operating with sub-critical water coolant) the insulator 2216 may be a gas-filled chamber outside the pressure tube 2162. In such configurations, an additional calandria tube 2400 could be provided around the outside of the pressure tube 2162 and insulating gas 2402 provided within the annulus between the calandria tube 2400 and the pressure tube 2162. The gas 2402 may be any suitable gas, including, for example nitrogen and carbon dioxide. Providing a gas-filled annulus may also help facilitate pressure tube leak detection by monitoring quality and/or moisture content of the annulus gas.

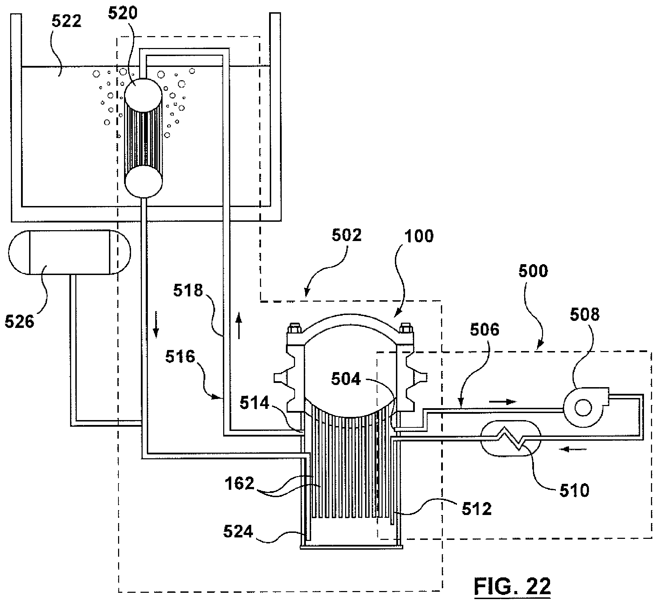

Referring to Figure 22, a schematic representation of reactor 100 (and reactors 1100 and 2100) shows examples of pressure tubes 162 that are submerged within a liquid, heavy-water moderator. Enabling at least some thermal transfer between the liner tube 174 and the pressure tube 162 may allow the moderator to function as a supplementary or back-up cooling mechanism to help cool the fuel channels 150. For example, in the event of a fuel channel assembly 150 overheating or a breakdown of the insulator 216, the pressure tube sidewall 256 may be exposed to the high temperature coolant. At least some of this heat may be transferred through the pressure tube sidewall 256 into the moderator liquid. Providing a mechanism to help circulate and maintain the temperature of the moderator fluid may help provide emergency cooling for the reactor 100. If the moderator can effectively absorb and remove heat from the pressure tubes 162, thereby helping to cool the fuel channel assemblies 150, it may help prevent temperature of the pressure tube sidewall 256 from reaching levels at which the pressure tube 162 may weaken, deform, melt or otherwise fail.

Optionally, the reactor 100 may include one or more moderator cooling systems to help maintain the temperature of the moderator in the event that it is needed to absorb heat from the fuel channel assemblies/ pressure tube. In the illustrated example, the reactor includes an active cooling system 500 and an independent passive cooling system 502.

The active cooling system 500 includes a moderator outlet port 504, located toward the top of the calandria 102, to draw the relatively warm moderator into the active cooling loop 506. The loop also includes a pump 508 for circulating the moderator within the loop, a heat exchanger 510 for cooling the moderator to a desired temperature, and a moderator inlet port 512 provided toward the bottom of the calandria 102.

The passive cooling system 502 includes a moderator outlet port 514 located toward the top of the calandria 102, to receive relatively warm moderator fluid. As the moderator temperature rises, fluid within the inlet of the passive cooling loop 516 will tend to flow upward within vertical column 518. As the moderator level rises, the hydraulic head pressure within the column decreases, and may decrease to a level at which the moderator fluid boils and becomes a two-phase mixture. Moderator vapour continues to rise within the column, further reducing the static pressure in the column and promoting further boiling of the liquid within the column 518. The moderator vapour is then passed through a passive heat exchanger 520, optionally submerged in a secondary cooling pool 522 or air cooled, where it condenses and flows back into the calandria 102 via moderator inlet port 524. Additional moderator fluid may be provided by an optional moderator make up source 526 in communication with the passive loop 516, or optionally active loop 506.

While the moderator remains at an elevated temperature, thermal convective forces may auto-circulate fluid through the passive cooling circuit 502 without the need for active pumps or other drive mechanisms. Such passive cooling may be beneficial in instances where electrical power is not available.

What has been described above has been intended to be illustrative of the invention and non-limiting and it will be understood by persons skilled in the art that other variants and modifications may be made without departing from the scope of the invention as defined in the claims appended hereto.

## Claims

1. A pressure-tube nuclear reactor comprising:
a. an outer shell vessel (102) for containing a moderator at a first pressure;
b. a coolant inlet plenum (120) provided above the moderator;
c. a coolant outlet plenum (124), wherein one of the coolant inlet plenum (120) and coolant outlet plenum (124) is within the other of the coolant inlet plenum (120) and the coolant outlet plenum (124);
d. a plurality of fuel channel assemblies (150) adapted for a coolant fluid at a second, higher pressure and fluidly connected at inlet ends thereof to the coolant inlet plenum (120), the fuel channel assemblies (150) being mounted within the outer shell vessel (102) and surrounded by the moderator and outlet ends thereof being fluidly connected to the coolant outlet plenum (124) to enable the coolant fluid to circulate from the coolant inlet plenum (120) through the fuel channels (150) to the coolant outlet plenum (124);
e. each fuel channel assembly (150) extending in an axial direction and comprising:
i. an outer conduit (174), the outer conduit (174) having an upper end and a lower end axially spaced apart from the upper end;
ii. an inner conduit (172) disposed at least partially within the outer conduit (174), the inner conduit (172) having an upper end and a lower end, wherein one upper end of one of the inner (172) and the outer conduits (174) is in communication with the coolant inlet plenum (120) and the other upper end of the other of the inner and outer conduits is in communication with the coolant outlet plenum (124), wherein the outer conduit (174) and the inner conduit (172) are adapted such that coolant flows from the coolant inlet plenum (120) through said one upper to the lower ends of the inner (172) and outer conduits (174) and through the other upper end to the coolant outlet plenum (124);
iii. a fuel bundle chamber (176) defined between an inner surface of the outer conduit (174) and an outer surface of the inner conduit (172), the fuel bundle chamber (176) at least partially laterally surrounding the inner conduit (172) and configured to receive at least one nuclear fuel bundle (160), whereby the fuel bundle (160) is adapted such that coolant flow in the fuel bundle chamber (176) passes through the fuel bundle (160); and
f. the plurality of fuel channel assemblies (150) maintaining separation between the coolant fluid circulating within the fuel channels and the moderator.

2. The reactor of claim 1, wherein the inlet plenum (120) is below the outlet plenum (124), and at least a portion of the outer conduit (174) extends through the inlet plenum (120).

3. The reactor of claim 1, wherein the outlet plenum (124) is below the inlet plenum (120) and at least a portion of the inner conduit (172) extends through the outlet plenum (124).

4. The reactor of any one of claims 1 to 3, wherein the outlet plenum (124) is received within the inlet plenum (120).

5. The reactor of claim 4, wherein coolant contained within the inlet plenum (120) can circulate around the exterior of the outlet plenum (124).

6. The reactor of any one of claims 1 to 5, wherein the inner (172) and outer conduits (174) are configured so that coolant enters the one inner end at a first velocity and exits the other inner end at a second velocity that is greater than the first velocity.

7. The reactor of claim 6, wherein the second velocity is at least twice as fast as the first velocity.

8. The reactor of claim any one of claims 1 to 7, further comprising a pressure tube (162) surrounding at least a portion of the outer conduit (174), the pressure tube (162) having an open pressure tube upper end to receive the outer conduit (174) and the inner conduit (172) and a closed pressure tube lower end submerged in the moderator and enclosing the inner and outer lower ends.

9. The reactor of claim 8, further comprising a tubesheet (114) positioned between the moderator and the coolant inlet plenum (120) and the coolant outlet plenum (126) and each fuel channel assembly (150) passing through a respective opening in the tubesheet (114).

10. The reactor of claim 9, wherein each pressure tube (162) comprises a first portion and a second portion positioned below the first portion and spaced apart from the first portion by an axial offset distance, the first portion having a first portion upper end in fluid communication with the coolant outlet plenum (124) and a first portion lower end sealed to the tubesheet (114) and the second portion comprising an upper end sealed to the tubesheet (114) and in fluid communication with the lower end of the first portion and comprising the closed pressure tube (162) lower end submerged in the moderator.

11. The reactor of claim 10, wherein the second portion of each pressure tube (162) comprises a laterally outwardly extending shoulder portion (235) bearing against a complementary seat portion (237) on the tubesheet (114), the engagement between the shoulder portion (235) and the seat portion (237) transferring at least some of the weight of the pressure tube (162) to the tubesheet (114).

12. The reactor of claim 10, wherein the first portion is formed from a different material than the second portion.

13. The reactor of claim 10, wherein a rim (280) at the lower end of the first portion is welded to the tubsheet (114) and provides a fluid tight connection between the tubesheet (114) and the first portion.

14. The reactor of claim 10, wherein the upper end of the first portion is coupled to a wall of the coolant outlet plenum (124) and provides a fluid tight connection between the wall of the coolant outlet plenum (124) and the first portion.

## Patentansprüche

1. Druckröhren-Kernreaktor, aufweisend:
a) ein äußeres Schalengefäß (102) zum Enthalten eines Ausgleichers auf einem ersten Druck;
b) einen Kühlmitteleinlassraum (120), der über dem Ausgleicher vorgesehen ist;
c) einen Kühlmittelauslassraum (124), wobei sich einer des Kühlmitteleinlassraums (120) und des Kühlmittelauslassraums (124) innerhalb des anderen des Kühlmitteleinlassraums (120) und des Kühlmittelauslassraums (124) befindet;
d) mehrere Brennstoffkanalanordnungen (150), die für ein Kühlmittelfluid auf einem zweiten, höheren Druck geeignet sind und fluidtechnisch an Einlassenden davon mit dem Kühlmitteleinlassraum (120) verbunden sind, wobei die Brennstoffkanalanordnungen (150) innerhalb des äußeren Schalengefäßes (102) angebracht sind und vom Ausgleicher umgeben sind und Auslassenden davon fluidtechnisch mit dem Kühlmittelauslassraum (124) verbunden sind, um zu ermöglichen, dass das Kühlmittelfluid vom Kühlmitteleinlassraum (120) durch die Brennstoffkanäle (150) zum Kühlmittelauslassraum (124) zirkuliert;
e) wobei jede Brennstoffkanalanordnung (150) in einer axialen Richtung verläuft und Folgendes aufweist:
I. eine äußere Leitung (174), wobei die äußere Leitung (174) ein oberes Ende und ein unteres Ende aufweist, das vom oberen Ende beabstandet ist;
II. eine innere Leitung (172), die mindestens teilweise innerhalb der äußeren Leitung (174) angeordnet ist, wobei die innere Leitung (172) ein oberes Ende und ein unteres Ende aufweist, wobei ein oberes Ende von einer der inneren (172) und äußeren Leitung (174) mit dem Kühlmitteleinlassraum (120) in Verbindung steht und das andere obere Ende der anderen der inneren und äußeren Leitung in Verbindung mit dem Kühlmittelauslassraum (124) steht, wobei die äußere Leitung (174) und die innere Leitung (172) dazu geeignet sind, dass das Kühlmittel vom Kühlmitteleinlassraum (120) durch das eine obere Ende zu den unteren der inneren (172) und äußeren Leitung (174) und durch das andere obere Ende zum Kühlmittelauslassraum (124) strömt;
III. eine Brennstoffbündelkammer (176), die zwischen einer Innenfläche der äußeren Leitung (174) und einer Außenfläche der inneren Leitung (172) definiert ist, wobei die Brennstoffbündelkammer (176) die innere Leitung (172) mindestens teilweise seitlich umgibt und zum Aufnehmen von mindestens einem Kernbrennstoffbündel (160) konfiguriert ist, wobei das Brennstoffbündel (160) dazu geeignet ist, dass ein Kühlmittelstrom, der in der Brennstoffbündelkammer (176) strömt, durch das Brennstoffbündel (160) läuft; und
f) wobei die mehreren Brennstoffkanalanordnungen (150) die Trennung zwischen dem Kühlmittelfluid, das innerhalb der Brennstoffkanäle zirkuliert, und dem Ausgleicher aufrechterhalten.

2. Reaktor nach Anspruch 1, wobei sich der Einlassraum (120) unterhalb des Auslassraums (124) befindet und mindestens ein Abschnitt der äußeren Leitung (174) durch den Einlassraum (120) verläuft.

3. Reaktor nach Anspruch 1, wobei sich der Auslassraum (214) unterhalb des Einlassraums (120) befindet und mindestens ein Abschnitt der inneren Leitung (172) durch den Auslassraum (124) verläuft.

4. Reaktor nach einem der Ansprüche 1 bis 3, wobei der Auslassraum (124) innerhalb des Einlassraums (120) aufgenommen ist.

5. Reaktor nach Anspruch 4, wobei das Kühlmittel, das innerhalb des Einlassraums (120) enthalten ist, um die Außenseite des Auslassraums (124) zirkulieren kann.

6. Reaktor nach einem der Ansprüche 1 bis 5, wobei die innere (172) und äußere Leitung (174) derart konfiguriert sind, dass Kühlmittel mit einer ersten Geschwindigkeit in das eine innere Ende eintritt und mit einer zweiten Geschwindigkeit, die größer als die erste Geschwindigkeit ist, aus dem anderen inneren Ende austritt.

7. Reaktor nach Anspruch 6, wobei die zweite Geschwindigkeit mindestens zwei Mal so schnell wie die erste Geschwindigkeit ist.

8. Reaktor nach einem der Ansprüche 1 bis 7, ferner aufweisend eine Druckröhre (162), die mindestens einen Abschnitt der äußeren Leitung (174) umgibt, wobei die Druckröhre (162) ein offenes oberes Druckröhrenende zum Aufnehmen der äußeren Leitung (174) und der inneren Leitung (172) und ein geschlossenes unteres Druckröhrenende aufweist, das im Ausgleicher versenkt ist und das innere und äußere untere Ende einfasst.

9. Reaktor nach Anspruch 8, ferner aufweisend eine Röhrenplatte (114), die zwischen dem Ausgleicher und dem Kühlmitteleinlassraum (120) und dem Kühlmittelauslassraum (126) angeordnet ist, und wobei jede Brennstoffkanalanordnung (150) eine jeweilige Öffnung in der Röhrenplatte (114) durchläuft.

10. Reaktor nach Anspruch 9, wobei jede Druckröhre (162) einen ersten Abschnitt und einen zweiten Abschnitt aufweist, welcher unterhalb des ersten Abschnitts und um einen axialen Versatzabstand vom ersten Abschnitt beabstandet angeordnet ist, wobei der erste Abschnitt ein oberes Ende des ersten Abschnitts in Fluidverbindung mit dem Kühlmittelauslassraum (124) und ein unteres Ende des ersten Abschnitts aufweist, das an der Röhrenplatte (114) abgedichtet ist, und der zweite Abschnitt ein oberes Ende aufweist, das an der Röhrenplatte (114) abgedichtet ist und in Fluidverbindung mit dem unteren Ende des ersten Abschnitts steht, und das geschlossene untere Ende der Druckröhre (162) im Ausgleicher versenkt aufweist.

11. Reaktor nach Anspruch 10, wobei der zweite Abschnitt jeder Druckröhre (162) einen seitlich nach außen vorstehenden Schulterabschnitt (235) aufweist, der an einen komplementären Sitzabschnitt (237) an der Röhrenplatte (114) angelagert ist, wobei der Eingriff zwischen dem Schulterabschnitt (235) und dem Sitzabschnitt (237) mindestens etwas des Gewichts der Druckröhre (162) auf die Röhrenplatte (114) überträgt.

12. Reaktor nach Anspruch 10, wobei der erste Abschnitt aus einem anderen Material als der zweite Abschnitt ausgebildet ist.

13. Reaktor nach Anspruch 10, wobei ein Rand (280) am unteren Ende des ersten Abschnitts an die Röhrenplatte (114) geschweißt ist und eine fluiddichte Verbindung zwischen der Röhrenplatte (114) und dem ersten Abschnitt vorsieht.

14. Reaktor nach Anspruch 10, wobei das obere Ende des ersten Abschnitts an eine Wand des Kühlmittelauslassraums (124) gekuppelt ist und eine fluiddichte Verbindung zwischen der Wand des Kühlmittelauslassraums (124) und dem ersten Abschnitt vorsieht.

## Revendications

1. Réacteur nucléaire à tubes de force, comprenant :
a. une cuve formant enveloppe extérieure (102) destinée à contenir un modérateur à une première pression ;
b. un plénum d'entrée de caloporteur (120) placé au-dessus du modérateur ;
c. un plénum de sortie de caloporteur (124), l'un des plénum d'entrée de caloporteur (120) et plénum de sortie de caloporteur (124) étant situé à l'intérieur de l'autre des plénum d'entrée de caloporteur (120) et plénum de sortie de caloporteur (124) ;
d. une pluralité d'ensembles canaux de combustible (150) adaptés à un fluide caloporteur à une deuxième pression, plus élevée, et dont les extrémités d'entrée sont reliées fluidiquement au plénum d'entrée de caloporteur (120), les ensembles canaux de combustible (150) étant montés à l'intérieur de la cuve formant enveloppe extérieure (102) et entourés par le modérateur, et leurs extrémités de sortie étant reliées fluidiquement au plénum de sortie de caloporteur (124) pour permettre au fluide caloporteur de circuler du plénum d'entrée de caloporteur (120) à travers les canaux de combustible (150) jusqu'au plénum de sortie de caloporteur (124) ;
e. chaque ensemble canal de combustible (150) s'étendant dans une direction axiale et comprenant :
i. un conduit extérieur (174), le conduit extérieur (174) présentant une extrémité supérieure et une extrémité inférieure espacée axialement de l'extrémité supérieure ;
ii. un conduit intérieur (172) disposé au moins partiellement à l'intérieur du conduit extérieur (174), le conduit intérieur (172) présentant une extrémité supérieure et une extrémité inférieure, une extrémité supérieure donnée d'un des conduits intérieur (172) et extérieur (174) étant en communication avec le plénum d'entrée de caloporteur (120) et l'autre extrémité supérieure de l'autre des conduits intérieur et extérieur étant en communication avec le plénum de sortie de caloporteur (124), le conduit extérieur (174) et le conduit intérieur (172) étant adaptés de sorte que le caloporteur s'écoule du plénum d'entrée de caloporteur (120) à travers ladite une extrémité supérieure donnée jusqu'aux extrémités inférieures des conduits intérieur (172) et extérieur (174) et à travers l'autre extrémité supérieure jusqu'au plénum de sortie de caloporteur (124) ;
iii. une chambre de faisceau de combustible (176) définie entre une surface intérieure du conduit extérieur (174) et une surface extérieure du conduit intérieur (172), la chambre de faisceau de combustible (176) entourant au moins partiellement latéralement le conduit intérieur (172) et étant configurée pour recevoir au moins un faisceau de combustible nucléaire (160), moyennant quoi le faisceau de combustible (160) est adapté de sorte que l'écoulement de caloporteur dans la chambre de faisceau de combustible (176) passe à travers le faisceau de combustible (160) ; et
f. la pluralité d'ensembles canaux de combustible (150) maintenant une séparation entre le fluide caloporteur circulant à l'intérieur des canaux de combustible et le modérateur.

2. Réacteur selon la revendication 1, dans lequel le plénum d'entrée (120) est en dessous du plénum de sortie (124) et au moins une partie du conduit extérieur (174) s'étend à travers le plénum d'entrée (120).

3. Réacteur selon la revendication 1, dans lequel le plénum de sortie (124) est en dessous du plénum d'entrée (120) et au moins une partie du conduit intérieur (172) s'étend à travers le plénum de sortie (124).

4. Réacteur selon l'une quelconque des revendications 1 à 3, dans lequel le plénum de sortie (124) est reçu à l'intérieur du plénum d'entrée (120).

5. Réacteur selon la revendication 4, dans lequel le caloporteur contenu dans le plénum d'entrée (120) est susceptible de circuler autour de l'extérieur du plénum de sortie (124).

6. Réacteur selon l'une quelconque des revendications 1 à 5, dans lequel les conduits intérieur (172) et extérieur (174) sont configurés de sorte que le caloporteur pénètre par l'extrémité intérieure donnée à une première vitesse et sort par l'autre extrémité intérieure à une deuxième vitesse qui est plus élevée que la première vitesse.

7. Réacteur selon la revendication 6, dans lequel la deuxième vitesse est au moins deux fois plus rapide que la première vitesse.

8. Réacteur selon l'une quelconque des revendications 1 à 7, comprenant en outre un tube de force (162) entourant au moins une partie du conduit intérieur (174), le tube de force (162) présentant une extrémité supérieure de tube de force ouverte destinée à recevoir le conduit extérieur (174) et le conduit intérieur (172), et une extrémité inférieure de tube de force obturée submergée dans le modérateur et enserrant les extrémités inférieures intérieure et extérieure.

9. Réacteur selon la revendication 8, comprenant en outre une plaque tubulaire (114) positionnée entre le modérateur et le plénum d'entrée de caloporteur (120) et le plénum de sortie de caloporteur (126) et chaque ensemble canal de combustible (150) passant à travers une ouverture respective dans la plaque tubulaire (114).

10. Réacteur selon la revendication 9, dans lequel chaque tube de force (162) comprend une première partie et une deuxième partie positionnée en dessous de la première partie et espacée de la première partie d'une distance de décalage axial, la première partie présentant une extrémité supérieure de première partie en communication fluidique avec le plénum de sortie de caloporteur (124) et une extrémité inférieure de première partie scellée à la plaque tubulaire (114), et la deuxième partie comprenant une extrémité supérieure scellée à la plaque tubulaire (114) et en communication fluidique avec l'extrémité inférieure de la première partie et comprenant l'extrémité inférieure de tube de force (162) obturée submergée dans le modérateur.

11. Réacteur selon la revendication 10, dans lequel la deuxième partie de chaque tube de force (162) comprend une partie formant épaulement s'étendant latéralement vers l'extérieur (235) en appui contre une partie formant siège complémentaire (237) sur la plaque tubulaire (114), la coopération entre la partie formant épaulement (235) et la partie formant siège (237) transférant au moins une partie du poids du tube de force (162) vers la plaque tubulaire (114).

12. Réacteur selon la revendication 10, dans lequel la première partie est constituée d'un matériau différent de celui de la deuxième partie.

13. Réacteur selon la revendication 10, dans lequel un rebord (280) au niveau de l'extrémité inférieure de la première partie est soudé à la plaque tubulaire (114) et assure une liaison étanche au fluide entre la plaque tubulaire (114) et la première partie.

14. Réacteur selon la revendication 10, dans lequel l'extrémité supérieure de la première partie est accouplée à une paroi du plénum de sortie de caloporteur (124) et assure une liaison étanche au fluide entre la paroi du plénum de sortie de caloporteur (124) et la première partie.
